# EUROPEAN PATENT SPECIFICATION

(11) **EP 1 764 388 B1**
(45) Date of publication and mention of the grant of the patent: **29.10.2008**
(21) Application number: 06019357.0
(22) Date of filing: 15.09.2006
(51) Int. Cl.: C08K 5/00, C09J 11/06

(54) **Composition, method of manufacturing a composition, heat-sensitive adhesive material, and information recording material**
Zusammensetzung, Verfahren zu deren Herstellung, wärmeempfindliches Klebematerial sowie Informationsaufzeichnungsmaterial
Composition, méthode de fabrication, matériau adhésif thermosensible et matériau d'enregistrement d'information

(30) Priority: 16.09.2005 JP 2005271002; 08.09.2006 JP 2006243685
(43) Date of publication of application: 21.03.2007
(73) Proprietor: Ricoh Company, Ltd., Tokyo 143-8555 (JP)
(72) Inventor: Kugo, Tomoyuki, Shizuoka (JP); Inaba, Norihiko, NShizuoka (JP)
(74) Representative: Barz, Peter

(56) References cited:
- DATABASE WPI Week 200228 Derwent Publications Ltd., London, GB; AN 2002-221344 XP002410497 & JP 2001 354847 A (ASAHI DENKA KOGYO KK) 25 December 2001 (2001-12-25)
- DATABASE WPI Week 200256 Derwent Publications Ltd., London, GB; AN 2002-523268 XP002410498 & JP 2002 155264 A (DAINIPPON INK & CHEM INC) 28 May 2002 (2002-05-28)

## Description

### BACKGROUND OF THE INVENTION

### 1. Field of the Invention

The present invention relates to a composition, a method of manufacturing a composition, a heat-sensitive adhesive material, and an information recording material.

### 2. Description of the Related Art

Conventionally, various known techniques relating to a heat-sensitive adhesive, a heat-sensitive adhesive sheet, etc., are disclosed.

For example, there is disclosed in Japanese Laid-Open Patent Application No. 8-333565, a heat-sensitive adhesive in which the average particle diameter of a thermoplastic resin is 0.3 µm or less and the content of a gel is 3 - 83 % in an aqueous dispersion liquid of heat-sensitive adhesive based on a thermoplastic resin and a solid plasticizer, and a heat-sensitive adhesive sheet obtained by coating and drying the heat-sensitive adhesive on one side of a substrate.

Particularly, it is disclosed on paragraph 0035 in Japanese Laid-Open Patent Application No. 8-333565 that the solid plasticizer, a dispersing agent, and water are mixed and appropriately subjected to a milling process as a method of providing the solid plasticizer with the average particle diameter described above, and various kinds of surfactants such as nonionic surfactants can be used as a dispersing agent. It is also disclosed that polyoxyethylene alkyl (particularly, C₅ - C₃₀) ethers, polyoxyethylene alkyl (particularly, C₁ - C₂₀) aryl (particularly, phenyl) ethers, polyoxyethylene - oxyethylene - oxypropylene block copolymers, sorbitan fatty acid (particularly, C₅ - C₃₀) esters, polyoxyethylene sorbitan fatty acid (particularly, C₅ - C₃₀) esters, polyoxyethylene sorbitol fatty acid (particularly, C₅ - C₃₀) esters, glycerin fatty acid (particularly, C₅ - C₃₀) esters, polyoxyethylene fatty acid (particularly, C₅ - C₃₀) esters, polyoxyethylene alkyl (particularly, C₅ - C₃₀) amines, alkyl (particularly, C₅ - C₃₀) alkanolamides, etc., can be provided as a nonionic surfactant. In addition, a nonionic surfactant (commercial name: Noigen EA-120, available from Dai-ichi Kogyo Seiyaku Co., Ltd.) as a dispersing agent is disclosed on paragraph 0059 in Japanese Laid-Open Patent Application No. 8-333565.

Further, it is disclosed in Japanese Laid-Open Patent Application No. 2002-155264 an aqueous dispersion-type delayed-tack adhesive composition composed of a thermoplastic resin, an adherence imparting resin, and a solid plasticizer and containing a carboxylic acid-containing copolymer as an aqueous dispersing agent for a solid plasticizer, and a delayed tack-type adhesive label in which a delayed tack-type adhesive composition layer containing a thermoplastic resin, an adherence imparting resin, a solid plasticizer and a carboxylic acid containing copolymer is provided on a substrate for a label. It is also disclosed on paragraph 0004 in Japanese Laid-Open Patent Application No. 2002-155264 that a nonionic emulsifier, etc., has been used as a dispersing agent for making the solid plasticizer be aqueous, and polyoxyethylene alkyl ethers, polyoxyethylene alkyl aryl ethers, polyoxyethylene - oxypropylene block copolymers, sorbitan fatty acids, polyoxy fatty acid esters, polyoxyethylene alkyl amines, etc., can be provided as a nonionic emulsifier, and nonylphenyl alkylene ethers as examples of nonionic surfactant can be provided.

Among nonionic surfactants and nonionic emulsifiers, when a nonionic surfactant or nonionic emulsifier which shows a high HLB (hydrophilic - lipophilic balance) value is used as a dispersing agent for a disperse system, air bubble may be easily generated in a disperse system containing a solid plasticizer. As a result, a solid plasticizer may not be able to be uniformly dispersed in a dispersive medium in a process for dispersing a solid plasticizer in a dispersive medium. Also, in a process for coating a disperse system on a substrate, etc., the disperse system may not be able to be uniformly coated on the substrate.

On the other hand, when a nonionic surfactant or nonionic emulsifier which shows a low HLB value and has an anti-foaming property is used as a dispersing agent for a disperse system, the generation of air bubbles can be suppressed in a disperse system containing a solid plasticizer. However, the nonionic surfactant or nonionic emulsifier which shows a low HLB value may not show a sufficient property as a dispersing agent and may degrade the dispersibility of a solid plasticizer in a dispersive medium.

Also, when the particle diameter of a micelle of a solid plasticizer and a nonionic surfactant or nonionic emulsifier which are dispersing in a dispersive medium is miniaturized by using a dispersion machine, the disperse system often passes through a state of whip. As a result, there occurs a problem of insufficient circulation of a disperse system in a dispersion machine or extension of a time period (dispersion time) required for achieving sufficient dispersion in a disperse system.

Further, since the particle diameter of a micelle of a solid plasticizer and a nonionic surfactant or nonionic emulsifier which are dispersing in a disperse system may show an ununiform particle size distribution, a solid plasticizer contained in a heat-sensitive adhesive material obtained from a disperse system containing the solid plasticizer may show an ununiform distribution. As a result, the adhesive property of a heat-sensitive adhesive material may be significantly degraded. Also, the blocking resistance of a solid plasticizer in a heat-sensitive adhesive material may be significantly degraded. That is, the quality of a heat-sensitive adhesive material may be significantly degraded.

JP2001 - 354 847 A1 discloses adhesive compositions comprising nonionic polyurethane and a blend of nonionic diol-type surfactants, one of them having a clouding point of 10 to 80 °C and the other one having a clouding point of 100 °C or more. Optional additives, e.g. antioxidant, plasticizer, UV-light absorbent, colorant, etc., may be added as needed.

### SUMMARY OF THE INVENTION

According to one aspect of the present invention, there is provided a composition which contains a plasticizer for plasticizing a thermoplastic resin and a surfactant, wherein the surfactant includes a surfactant having a clouding point equal to or higher than 50 °C, wherein the clouding point of the surfactant is the temperature at which the whole of a clear aqueous solution of a surfactant with a concentration of 0.5% by weight that is heated under atmospheric pressure becomes sharply clouded, and wherein the plasticizer is selected from the group consisting of phthalic acid esters; N-cyclohexyl-p-toluene sulfonamide; benzoic acid esters; sucrose octoacetate; dimethyl isophthalate; tricyclohexyl citrate; catechol derivatives; hindered phenol-type compounds; and triazole compounds.

According to another aspect of the present invention, there is provided a method of manufacturing a composition for manufacturing a composition which contains a plasticizer for plasticizing a thermoplastic resin and a surfactant, wherein a surfactant having a clouding point equal to or higher than 50 °C is used, and wherein the plasticizer is selected from the group consisting of phthalic acid esters; N-cyclohexyl-p-toluene sulfonamide; benzoic acid esters; sucrose octoacetate; dimethyl isophthalate; tricyclohexyl citrate; catechol derivatives; hindered phenol-type compounds; and triazole compounds.

According to another aspect of the present invention, there is provided a composition which is manufactured by a method of manufacturing a composition in accordance with the above-described aspect of the present invention.

According to another aspect of the present invention, there is provided a heat-sensitive adhesive material which exerts an adhesive property thereof by heating, and which has a layer which contains a thermoplastic resin, a plasticizer for plasticizing the thermoplastic resin and a surfactant having a clouding point equal to or higher than 50 °C, and wherein the plasticizer is selected from the group consisting of phthalic acid esters; N-cyclohexyl-p-toluene sulfonamide; benzoic acid esters; sucrose octoacetate; dimethyl isophthalate; tricyclohexyl citrate; catechol derivatives; hindered phenol-type compounds; and triazole compounds.

According to another aspect of the present invention, there is provided a heat-sensitive adhesive material which exerts an adhesive property thereof by heating, and which includes a layer obtained by drying a composition in accordance with one of the above-described aspects of the present invention and further containing a thermoplastic resin or a composition in accordance with one of the above-described aspects of the present invention.

According to another aspect of the present invention, there is provided an information recording material capable of recording information, which includes a heat-sensitive adhesive material in accordance with one of the above-described aspects of the present invention.

### BRIEF DESCRIPTION OF THE DRAWINGS

FIG. 1 is diagram of schematically illustrating an example of a composition according to the first or third embodiment of the present invention.
FIG. 2A is a diagram of schematically illustrating the first example of a method of manufacturing a composition according to the second embodiment of the present invention and the first example of a method of manufacturing a heat-sensitive adhesive material according to the fourth or fifth embodiment of the present invention.
FIG. 2B is a diagram of schematically illustrating the second example of a method of manufacturing a composition according to the second embodiment of the present invention and the second example of a method of manufacturing a heat-sensitive adhesive material according to the fourth or fifth embodiment of the present invention.
FIG. 3 is a diagram of schematically illustrating an example of a heat-sensitive adhesive material according to the fourth or fifth embodiment of the present invention.
FIG. 4 is a diagram of schematically illustrating the first example of an information recording medium according to the sixth embodiment of the present invention.
FIG. 5 is a diagram of schematically illustrating the second example of an information recording medium according to the sixth embodiment of the present invention.
FIG. 6 is a diagram of schematically illustrating an apparatus of preparing a solid plasticizer dispersion liquid used in practical examples and comparative examples of the present invention.

### DETAILED DESCRIPTION OF THE PREFERRED EMBODIMENTS

Next, embodiments of the present invention are described with reference to the drawings.

### [Composition]

The first embodiment of the present invention is a composition which contains a plasticizer for plasticizing a thermoplastic resin and a surfactant, wherein the surfactant includes a surfactant having a clouding point equal to or higher than 50 °C.

The plasticizer contained in the composition according to the first embodiment of the present invention is a plasticizer capable of plasticizing a thermoplastic resin and is not particularly limited. Additionally, a plasticizer is a compound which can swell or soften a thermoplastic resin so as to exert an adhesive property of the thermoplastic resin.

As a plasticizer for plasticizing a thermoplastic resin, there is provided phthalic acid esters such as dihexyl phthalate, dicyclohexyl phthalate, dihydroabiethyl phthalate, and diphenyl phthalate; N-cyclohexyl-p-toluenesulfonamide; benzoic acid esters such as sucrose benzoate, ethylene glycol dibenzoate, trimethylolethane tribenzoate, and pentaerythritol tetrabenzoate; sucrose octaacetate; dimethyl isophthalate; tricyclohexyl citrate; catechol derivatives such as catechol dipalmitate, catechol distearate, and catechol dibenzoate; hindered phenol-type compounds such as thiobis[ethylene-3-(3,5-di-t-butyl-4-hydroxyphenyl)propionate], triethylene glycol bis[3-(3-t-butyl-4-hydroxy-5-methylphanyl)propionate], and 1,6-hexanediol bis[3-(3,5-di-t-butyl-4-hydroxphenyl)propionate]; triazole compounds such as 2-[5'-(1'',1'',3'',3''-tetramethylbutyl)-2'-hydroxyphanyl]benzotriazole, 2-[5'-(1'',1'',2'',3''-tetramethylbutyl)-2'-hydroxyphenyl]benzotriazole, 2-[3',5'-di-(2'',2''-dimethylpropyl)-2'-hydroxyphenyl]benzotriazole, and 2-(3'-t-butyl-5'-methyl-2'-hydroxyphanyl)-5-chlorobenzotriazole. The plasticizer for plasticizing a thermoplastic resin may be a single compound or may be a combination of plural compounds.

Also, a plasticizer for plasticizing a thermoplastic resin is preferably a solid plasticizer which is solid at ordinary temperature (equal to or less than 40 °C). When the plasticizer for plasticizing a thermoplastic resin is a solid plasticizer, the plasticizer does not plasticize the thermoplastic resin at ordinary temperature but melts by heating the plasticizer. Then, the thermoplastic resin is swelled or softened so as to exert the adhesive property of the thermoplastic resin.

Also, the plasticizer for plasticizing a thermoplastic resin is a solid plasticizer, the composition according to the first embodiment of the present invention may be, for example, a solid plasticizer dispersing system in which a milled solid plasticizer is dispersed in a dispersive medium. Additionally, the dispersive medium nay be a aqueous dispersive medium that contains water, and, in this case, the composition according to the first embodiment of the present invention may a liquid (a solid plasticizer dispersion liquid) in which a milled solid plasticizer is an aqueous dispersive medium. In order to mill (microparticulate) a solid plasticizer and disperse it in a dispersive medium, wet dispersion means can be used. As wet dispersion means, for example, wet dispersion means can be provided such as a ball mill, a sand mill, a paint shaker, a dyno mill, an atliter, and a Henschel mixer.

The surfactant may be any of a cationic surfactant, an anionic surfactant, a non-ionic (nonionic) surfactant, an ampholytic surfactant, and the combinations thereof. Herein, a combination means that arbitrary plural options are combined. Since the composition according to the first embodiment of the present invention contains a surfactant, the dispersion property (stability) of a plasticizer in the composition can be improved. When a plasticizer is dispersed in the composition, foaming of the composition can be suppressed (the anti-foaming property of the composition can be improved).

In the composition according to the first embodiment of the present invention, the surfactant includes a surfactant having a clouding point equal to or higher than 50 °C. Herein, "the surfactant including a surfactant having a clouding point equal to or higher than 50 °C" means that the surfactant includes a single or plural kinds of surfactant(s) having a clouding point equal to or higher than 50 °C and may include a surfactant which does not have a clouding point equal to or higher than 50 °C in a range such that the effect of the present invention is not impaired. Additionally, the surfactant which does not have a clouding point equal to or higher than 50 °C includes a surfactant having a clouding point lower than 50 °C and/or a surfactant having no clouding point. In the composition according to the first embodiment of the present invention, the surfactant is preferably a surfactant having a clouding point equal to or higher than 50 °C. Herein, "the surfactant being a surfactant having a clouding point equal to or higher than 50 °C" means that the surfactant completely or substantially is a single or plural kinds of surfactant(s) having a clouding point equal to or higher than 50 °C, and the surfactant substantially being a single or plural kinds of surfactant(s) having a clouding point equal to or higher than 50 °C means that the content of a surfactant which does not have a clouding point equal to or higher than 50 °C included in the surfactant can be ignored (can be regarded as an impurity).

Next, the clouding point of a surfactant is described. When a clear aqueous solution of a surfactant with a concentration is heated, the whole of the clear aqueous solution of a surfactant may sharply become clouded at a temperature. Then, a phase containing the surfactant may be separated from water. Thus, when a clear aqueous solution of a surfactant with a concentration is heated, a temperature at which the whole of the clear aqueous solution of a surfactant sharply becomes clouded is a clouding point of the surfactant. In this case, when a clouded aqueous solution of a surfactant with a concentration is cooled, the whole of the clouded aqueous solution of a surfactant sharply becomes clear at the temperature (clouding point).

Additionally, in the composition according to the first embodiment of the present invention, when a clear aqueous solution of a surfactant with a concentration of approximately 0.5 % by weight (for example, 0.50 % by weight) is heated, the average of a measurement value of Celsius temperature at which the whole of a clear aqueous solution of a surfactant sharply becomes clouded is defined as a clouding point of the surfactant, or when a clouded aqueous solution of a surfactant with the concentration is cooled, the average of a measurement value of Celsius temperature at which the whole of a clouded aqueous solution of a surfactant sharply becomes clear is defined as a clouding point of the surfactant. Also, in the composition according to the first embodiment of the present invention, the clouding point of the surfactant has a value with two significant digits.

The heating rate when a clear aqueous solution of a surfactant is heated and the cooling rate when a clouded aqueous solution of a surfactant is cooled are arbitrary heating rate and cooling rate such that a measurement value with two significant digits can be obtained whereby the value of the clouding point of a surfactant can be specified. For example, the heating rate when a clear aqueous solution of a surfactant is heated may be a heating rate lower than a heating rate of 1 degree/minute and the cooling rate when a clouded aqueous solution of a surfactant is cooled may be a cooling rate lower than a cooling rate of 1 degree/minute.

Also, since the whole of a clear aqueous solution of a surfactant sharply becomes clouded and the whole of a clouded aqueous solution of a surfactant sharply becomes clear, a temperature at which the whole of a clear aqueous solution of a surfactant sharply becomes clouded and a temperature at which the whole of a clouded aqueous solution of a surfactant sharply becomes clear can be sufficiently sensed by visual observation in order to obtain the value of a clouding point of the surfactant in a range of two significant digits.

Additionally, the pressure applied to an aqueous solution of a surfactant is atmospheric pressure (the pressure of natural atmosphere which is not artificially applied). When the pressure applied on a aqueous solution of a surfactant is atmospheric pressure, the pressure applied on the aqueous solution of a surfactant does not influence the measurement value.

The clouding point of a surfactant is measured by using an apparatus having arbitrary heating means for heating an aqueous solution of a surfactant and arbitrary temperature measuring means whereby the temperature of an aqueous solution of a surfactant can be measured. The arbitrary heating means for heating an aqueous solution of a surfactant are preferably means which can control a heating rate at which the aqueous solution of a surfactant is heated. Also, an apparatus for measuring the clouding point of a surfactant preferably has arbitrary cooling means for cooling an aqueous solution of a surfactant. The arbitrary cooling means for cooling an aqueous solution of a surfactant are preferably means whereby the cooling rate at which an aqueous solution of a surfactant is cooled can be controlled. As an apparatus for measuring the clouding point of a surfactant, for example, a commercially available measurement apparatus such as a water bath and an etched-stem type thermometer may be used.

The surfactant preferably includes a nonionic surfactant. When the surfactant includes a nonionic surfactant, a surfactant having a clouding point equal to or higher than 50 °C can be comparatively easily obtained. Further, the nonionic surfactant is preferably a nonionic surfactant containing an oxyalkylene group. The oxyalkylene group is not particularly limited and the oxyalkylene group is preferably an oxyethylene group. As a nonionic surfactant containing an oxyalkylene group is dissolved in water, the oxyalkylene group of the nonionic surfactant forms a hydrogen bonding with a water molecule. Herein, as an aqueous solution of a nonionic surfactant containing an oxyalkylene group is heated, a water molecule is removed from the oxyalkylene group of the nonionic surfactant and the solubility of the nonionic surfactant containing an oxyalkylene group is lowered. Then, the temperature of an aqueous solution of a nonionic surfactant containing an oxyalkylene group is higher than the clouding point thereof, the nonionic surfactant containing an oxyalkylene group is separated from water and the whole of the aqueous solution becomes clouded. Herein, the clouding point of a nonionic surfactant containing an oxyalkylene group can be comparatively easily adjusted by selecting the kind or number of the oxyalkylene group(s) of the nonionic surfactant. Particularly, as the number of oxyalkylene group(s) of a nonionic surfactant is increased, the clouding point of a nonionic surfactant containing an oxyalkylene group can be raised.

As a surfactant having a clouding point equal to or higher than 50 °C, for example, there can be provided polyoxyethylenes having a clouding point equal to or higher than 50 °C such as polyoxyethylene alkyl ethers having a clouding point equal to or higher than 50 °C and polyoxyethylene alkyl phenyl ethers having a clouding point equal to or higher than 50 °C; polyoxyethylene esters having a clouding point equal to or higher than 50 °C such as polyoxyethylene polyhydric alcohol fatty acid esters having a clouding point equal to or higher than 50 °C; glycerin fatty acid esters having a clouding point equal to or higher than 50 °C; and sugar fatty acid esters having a clouding point equal to or higher than 50 °C. More specifically, as a surfactant having a clouding point equal to or higher than 50 °C, there can be provided LEOX 2008C (Natural alcohol, Clouding point: 50 °C, available from lion Corporation), LEOX 2160C (Natural alcohol, Clouding point: 60 °C, available from lion Corporation), LIONOL TD-2007 (Monool-type block type, Clouding point: 50 °C, available from lion Corporation), LIONOL TDM-90 (Monool-type block type, Clouding point: 59 °, available from lion Corporation), RK-103 (Diol, Clouding point: 50 °C, available from Nissin Chemical Industry Co., Ltd.), RK-70 (Diol, Clouding point: 53 °C, available from Nissin Chemical Industry Co., Ltd.) and RK-105 (Diol, Clouding point: 58 °C, available from Nissin Chemical Industry Co., Ltd.)

In regard to a composition according to the first embodiment of the present invention, in a composition which contains a plasticizer for plasticizing a thermoplastic resin and a surfactant, since the surfactant includes a surfactant having a clouding point equal to or higher than 50 °C, a composition capable of dispersing a plasticizer more stably can be provided.

In order to disperse a plasticizer in the composition according to the first embodiment of the present invention, high energy for dispersion is applied to the composition containing a plasticizer and a surfactant, and, at this time, the temperature of the composition may locally become high. When the surfactant is a surfactant having a clouding point lower than 50 °C, the temperature of the composition may be higher than the clouding point of the surfactant which is lower than 50 °C. In this case, the surfactant may be locally phase-separated and the ability of the surfactant to disperse a plasticizer may be degraded (it may become difficult to stably disperse the plasticizer). As a result, disadvantages may be caused such that the plasticizer aggregates in the composition so as to increase the viscosity of the composition, the form of the composition is changed to be mousse-like, and/or the sizes of particles of the plasticizer are un-uniformized, etc.

On the other hand, in the composition according to the first embodiment of the present invention, since the surfactant includes a surfactant having a clouding point equal to or higher than 50 °C, it is considered that a possibility can be reduced such that the temperature of the composition is higher than the clouding point of the surfactant although the temperature of the composition becomes locally high by applying energy for dispersion in order to disperse the plasticizer in the composition according to the first embodiment of the present invention. Therefore, it is considered that the local phase separation of the surfactant and the degradation of the ability of the surfactant to disperse a plasticizer are suppressed so that the plasticizer can be dispersed more stably.

Further, when the surfactant includes a surfactant having a clouding point equal to or higher than 50 °C, for example, a time period required for making the size of a plasticizer particle contained in the composition according to the first embodiment of the present invention be a predetermined size can be shorter. Also, when the surfactant includes a surfactant having a clouding point equal to or higher than 50 °C, for example, the viscosity of the composition according to the first embodiment of the present invention can be decreased (the fluidity of the composition according to the first embodiment of the present invention).

In addition, when a composition according to the first embodiment of the present invention is liquid and the surfactant includes a surfactant having a clouding point equal to or higher than 50 °C, for example, the coating characteristic of the composition according to the first embodiment of the present invention can be improved. Specifically, a stripe(s) and crawling and/or a contaminant(s) in a material obtained from the composition according to the first embodiment of the present invention can be reduced or prevented. That is, the composition according to the first embodiment of the present invention can be more uniformly coated on a supporter. Also, for example, since the composition according to the first embodiment of the present invention can be more uniformly coated on a supporter, the adhesive strength of a material obtained from the composition according to the first embodiment of the present invention can be improved. Further, for example, since the composition according to the first embodiment of the present invention can be more uniformly coated on a supporter, the blocking of a material obtained from the composition according to the first embodiment of the present invention can be better suppressed. In addition, for example, the characteristic of printing on a material obtained from the composition according to the first embodiment of the present invention can be improved.

In the composition of the first embodiment of the present invention, preferably, a content of the surfactant is equal to or more than 0.025 % by weight. Herein, the content of a surfactant means the content of all of surfactant(s) in the composition of the first embodiment of the present invention. More preferably, in the composition of the first embodiment of the present invention, the content of the surfactant is equal to or more than 0.050 % by weight, and further preferably, the content of the surfactant is equal to or more than 0.100 % by weight.

When the content of the surfactant is equal to or more than 0.025 % by weight, a composition capable of dispersing a plasticizer more stably can be provided, and for example, a time period required for making the size of a plasticizer particle contained in the composition according to the first embodiment of the present invention be a predetermined size can be shorter. On the other hand, when the content of the surfactant is less than 0.025 % by weight, the ability of the surfactant to disperse a plasticizer may be degraded and, for example, a time period required for making the size of a plasticizer particle contained in the composition according to the first embodiment of the present invention may be longer.

In the composition of the first embodiment of the present invention, preferably, a content of the surfactant is equal to or less than 0.250 % by weight. Herein, the content of a surfactant means the content of all of surfactant(s) in the composition of the first embodiment of the present invention. More preferably, in the composition of the first embodiment of the present invention, the content of the surfactant is equal to or less than 0.200 % by weight.

When the content of the surfactant is equal to or less than 0.250 % by weight, a composition capable of dispersing a plasticizer more stably can be provided and, for example, when a plasticizer is dispersed in the composition according to the first embodiment of the present invention, foaming in the composition can be reduced or suppressed. On the other hand, when the content of the surfactant is more than 0.250 % by weight, the surface tension of the composition may be lowered and foaming in the composition may be observed, since the content of the surfactant in the composition is too high.

Also, when the composition according to the first embodiment of the present invention is liquid and the content of the surfactant is equal to or less than 0.250 % by weight, for example, crawling in a material obtained from the composition according to the first embodiment of the present invention can be more reduced or prevented. Also, for example, the blocking of a material obtained from the composition according to the first embodiment of the present invention can be better suppressed. On the other hand, when the composition according to the first embodiment of the present invention is liquid and the content of the surfactant is more than 0.250 % by weight, the blocking of a material obtained from the composition according to the first embodiment of the present invention may easily occur.

Therefore, in the composition of the first embodiment of the present invention, more preferably, the content of the surfactant is equal to or more than 0.025 % by weight and equal to or less than 0.250 % by weight. Herein, the content of a surfactant also means the content of all of surfactant(s) in the composition of the first embodiment of the present invention. In this case, a composition capable of dispersing a plasticizer more stably can be provided and, for example, a time period required for making the size of a plasticizer particle contained in the composition according to the first embodiment of the present invention be a predetermined size can be shorter and foaming in the composition at the time of dispersing a plasticizer in the composition according to the first embodiment of the present invention can be reduced or prevented. Further, when the composition according to the first embodiment of the present invention is liquid, for example, crawling in a material obtained from the composition according to the first embodiment of the present invention can be reduced or prevented. Also, for example, the blocking of a material obtained from the composition according to the first embodiment of the present invention can be better suppressed.

In the composition of the first embodiment of the present invention, preferably, the surfactant includes a diol-type surfactant. Herein, the surfactant means all of surfactant(s) in the composition of the first embodiment of the present invention. Also, the diol-type surfactant means a nonionic surfactant containing plural oxyalkylene groups. Further, "the surfactant including a diol-type surfactant" means that the surfactant contains a single or plural kinds of diol-type surfactants and may contain a surfactant which is not a diol-type surfactant. In the composition according to the first embodiment of the present invention, preferably, the surfactant is a diol-type surfactant. Herein, "the surfactant including a diol-type surfactant" means that the surfactant is completely or substantially a single or plural kinds of diol-type surfactants, and the surfactant being substantially a single or plural kinds of diol-type surfactants means that the content of a surfactant which is contained in the surfactant and is not a diol-type surfactant can be ignored (can be regarded as impurities).

When the surfactant contains a diol-type surfactant, for example, the diol-type surfactant can disperse a plasticizer in aqueous dispersive medium with higher efficiency and can decrease the viscosity of an aqueous composition included in the first embodiment of the present invention (the fluidity of an aqueous composition included in the first embodiment of the present invention is more improved).

Also, when the composition according to the first embodiment of the present invention is liquid and the surfactant includes a diol-type surfactant, for example, the coating characteristic of the composition according to the first embodiment of the present invention can be improved. Specifically, a string(s) and crawling and a contaminant(s) on a material obtained from the composition according to the first embodiment of the present invention can be more reduced or prevented. That is, the composition according to the first embodiment of the present invention can be more uniformly coated on a supporter. Also, for example, since the composition according to the first embodiment of the present invention can be more uniformly coated on a supporter, the adhesive strength of a material obtained from the composition according to the first embodiment of the present invention can be more improved. Further, for example, since the composition according to the first embodiment of the present invention can be more uniformly coated on a supporter, the blocking of a material obtained from the composition according to the first embodiment of the present invention can be better suppressed. In addition, for example, the characteristic of printing on a material obtained from the composition according to the first embodiment of the present invention can be more improved.

Preferably, the composition of the first embodiment of the present invention further includes a thermoplastic resin. In this case, the composition according to the first embodiment of the present invention includes, at least, a thermoplastic resin, a plasticizer for plasticizing a thermoplastic resin and a surfactant. Herein, the thermoplastic resin and the plasticizer for plasticizing a thermoplastic resin may constitute a heat-sensitive adhesive material which exerts the adhesive property thereof by heating, and, in this case, a material obtained from the composition of the first embodiment of the present invention may be a heat-sensitive adhesive material and the composition according to the first embodiment of the present invention may be a heat-sensitive adhesive material coating liquid for providing a heat-sensitive adhesive material.

A thermoplastic resin which can be used for the composition according to the first embodiment of the present invention is not particularly limited. As a thermoplastic resin, for example, there can be provided acrylic acid ester copolymers, methacrylic acid ester copolymers, styrene - isoprene copolymers, styrene - acrylic acid ester copolymers, styrene - butadiene copolymers, acrylonitrile - butadiene copolymers, ethylene-vinyl acetate copolymers, vinyl acetate-acrylic acid ester copolymers, ethylene - vinyl chloride copolymers, ethylene - acrylic acid ester copolymers, vinyl acetate - ethylene - vinyl chloride copolymers, vinyl acetate - ethylene - acrylic acid ester copolymers, vinyl acetate - ethylene - styrene copolymers, and homopolymers such as polybutadiene, polyurethanes, poly(2-ethylhexyl acrylate), poly(butyl acrylate), poly(acrylonitrile), and poly(methyl methacrylate).

The thermoplastic resin which can be used for the composition of the first embodiment of the present invention may be a single kind of thermoplastic resin or a combination of plural kinds of thermoplastic resins.

The thermoplastic resin imparts tackiness or an adhesive property to a material obtained using a composition of the first embodiment of the present invention.

In the composition of the first embodiment of the present invention, preferably, the thermoplastic resin includes 2-ethylhexyl acrylate, and, more preferably, the thermoplastic resin is based on 2-ethylhexyl acrylate. Herein, "the thermoplastic resin being based on 2-ethylhexyl acrylate" means that the content of 2-ethylhexyl acrylate in the thermoplastic resin is more than 90 % by weight. Also, when the thermoplastic resin is based on 2-ethylhexyl acrylate, the thermoplastic resin preferably includes less than 10 % by weight of butyl acrylate and/or methyl methacrylate. In this case, a heat-sensitive adhesive material obtained by using a composition of the first embodiment of the present invention can be also well adhered to a material made of polyolefin which does not show a good wettability to a conventional heat-sensitive adhesive material.

The composition of the first embodiment of the present invention may contain an adhesive property improving agent for improving the adhesive property of a material obtained by using the composition of the first aspect of the present invention. The adhesive property improving agent melts by heating the adhesive property improving agent and the molten adhesive property improving agent gradually crystallizes. Therefore, the adhesive property of a material obtained by using the composition of the first embodiment of the present invention which contains an adhesive property improving agent can be held for a comparatively long time period after the heating of the composition of the first embodiment of the present invention is stopped.

An adhesive property improving agent which can be used for the composition of the first embodiment of the present invention is not particularly limited. As an adhesive property improving agent, for example, there can be provided terpene resins, aliphatic petroleum resins, aromatic petroleum resins, coumarone - indene resin, styrene resins, phenol resins, terpene phenol resins, and rosin derivative resins.

The content of an adhesive property improving agent contained in the composition of the first embodiment of the present invention is, for example, 200 % by weight or less of the content of a thermoplastic resin in the composition of the first embodiment of the present invention. In this case, the rate of blocking occurrence in a material obtained by using the composition of the first embodiment of the present invention can be reduced. More preferably, the content of an adhesive property improving agent is equal to or more than 20 % by weight and equal to or less than 150 % by weight of the content of a thermoplastic resin. On the other hand, when the content of an adhesive property improving agent contained in the composition of the first embodiment of the present invention is more than 200 % by weight of the content of a thermoplastic resin in the composition of the first embodiment of the present invention, the rate of blocking occurrence in a material obtained by using the composition of the first embodiment of the present invention may be increased.

The composition of the first embodiment of the present invention may contain a supercooling accelerator for accelerating the supercooling property of a plasticizer. In this case, the adhesive property of a material obtained by using the composition of the first embodiment of the present invention, under an environment of low temperature, can be improved.

As a supercooling accelerator which can be used for the composition of the first embodiment of the present invention, there can be provided naphthol derivatives such as 2-benzyloxynaphthalene; biphenyl derivatives such as meta-terphenyl, acetylbiphenyl, p-benzylbiphenyl and 4-allyloxybiphenyl; polyether compounds such as 1,2-bis(3-methylphenoxy)ethane, 2,2'-bis(4-methoxyphenoxy)diethyl ether and bis(4-methoxyphenyl)ether; and diesters of carbonic acid or oxalic acid such as diphenyl carbonate, dibenzyl oxalate, di(p-chlorobenzyl) oxalate and di(p-methylbenzyl)oxalate.

The supercooling accelerator preferably includes a dibenzyl oxalate derivatives and/or biphenyl derivatives. When the supercooling accelerator preferably includes a dibenzyl oxalate derivatives and/or biphenyl derivatives, the supercooling property of a plasticizer may be better maintained and the rate of blocking occurrence in a material obtained by using the composition of the first embodiment of the present invention may be able to be reduced. The supercooling accelerator more preferably includes at least one compound selected from the group including dibenzyl oxalate, di(p-methylbenzyl) oxalate and acetyl biphenyl.

The content of a supercooling accelerator contained in the composition of the first embodiment of the present invention is, for example, equal to or more than 10 % by weight and equal to or less than 70 % by weight of the content of a plasticizer in the composition of the first embodiment of the present invention. When the content of a supercooling accelerator is equal to or more than 10 % by weight and equal to or less than 70 % by weight of the content of a plasticizer, the rate of blocking occurrence in a material obtained by using the composition of the first embodiment of the present invention can be reduced and the adhesive property of a material obtained by using the composition of the first embodiment of the present invention, under an environment of low temperature, can be increased. More preferably, the content of a supercooling accelerator is equal to or more than 25 % by weight and equal to or less than 35 % by weight of the content of a plasticizer. On the other hand, when the content of an adhesive property improving agent contained in the composition of the first embodiment of the present invention is less than 10 % by weight of the content of a thermoplastic resin in the composition of the first embodiment of the present invention, the adhesive property of a material obtained by using the composition of the first embodiment of the present invention, under an environment of low temperature, may be degraded. On the other hand, when the content of an adhesive property improving agent contained in the composition of the first embodiment of the present invention is more than 70 % by weight of the content of a thermoplastic resin in the composition of the first embodiment of the present invention, the adhesive property of a material obtained by using the composition of the first embodiment of the present invention, both under an environment of low temperature and under an environment of high temperature, may be degraded.

The composition of the first embodiment of the present invention may contain an anti-blocking material for reducing or preventing the blocking of a material obtained by using the composition of the first embodiment of the present invention. The anti-blocking material for reducing or preventing the blocking of a material obtained by using the composition of the first embodiment of the present invention is not particularly limited, and there can be provided, for example, hot-melt materials and inorganic fillers.

As a hot-melt material, there can be provided, for example, waxes, higher fatty acids, N-hydroxymethyl stearamide, higher fatty amides except stearamides, higher fatty acid anilides, and acetylated aromatic amines. As a wax, there can be provided, for example, animal or plant waxes and synthesized waxes, such as paraffin waxes, haze wax, carnauba wax, shellac, montan wax, oxidized paraffins, polyethylene wax, and oxidized polyethylene. As a higher fatty acid, there can be provided, for example, stearic acid and behenic acid. As a higher fatty amide, there can be provided, for example, stearamide, oleylamide, N-methylstearamide, erucamide, methylol behenamide, methylol stearamide, methylenebis(stearamide), and ethylenebis(stearamide). As a higher fatty acid anilide, there can be provided, for example, stearic acid anilide and linoleic acid anilide. As an acetylated aromatic amine, there can be provided, for example, acetotoluidide. Also, as a hot-melt material, leuco dyes and developers, used for an heat-sensitive recording material, can be provided. Preferably, the hot-melt material is a hot-melt material having a high melting point, in order to reduce an influence to the adhesive strength of a material obtained by using the composition of the first embodiment of the present invention.

As an inorganic filler, there can provided, for example, carbonates (salts), oxides, hydroxides, and sulfates (salts) of metals such as aluminum, zinc, calcium, magnesium, barium and titanium, and inorganic pigments including clays such as natural silica, zeolite, kalion, and baked kalion. The inorganic filler is preferably an inorganic filler having a low oil absorption, in order to reduce an influence to the adhesive strength of a material obtained by using the composition of the first embodiment of the present invention.

The content of an anti-blocking material contained in the composition of the first embodiment of the present invention is, for example, equal to or less than 150 % by weight of the content of a thermoplastic resin in of the first embodiment of the present invention. When the content of the anti-blocking material is equal to or less than 150 % by weight of the content of a thermoplastic resin, the degradation of the adhesive property of a material obtained by using the composition of the first embodiment of the present invention can be suppressed. More preferably, the content of an anti-blocking material is equal to or more than 60 % by weight and equal to or less than 100 % by weight of the content of a thermoplastic resin. On the other hand, when the content of an anti-blocking material contained in the composition of the first embodiment of the present invention is more than 150 % by weight of the content of a thermoplastic resin in the composition of the first embodiment of the present invention, the adhesive property of a material obtained by using the composition of the first embodiment of the present invention may be degraded.

The composition of the first embodiment of the present invention may contain a binder resin, etc., in order to improve the adhesive property between a material obtained by using the composition of the first embodiment of the present invention and a supporter for supporting the material obtained by using the composition of the first embodiment of the present invention and/or to improve the cohesive strength within a material obtained by using the composition of the first embodiment of the present invention.

When the composition of the first embodiment of the present invention is an aqueous composition, the composition may contain an aqueous binder resin. As an aqueous binder resin, there can be provided, for example, poly(vinyl alcohol), poly(vinyl acetate), oxidized starch, etherified starch, cellulose derivatives such as carboxymethyl cellulose and hydroxyethyl cellulose; casein, gelatin, and sodium alginate. The content of a (aqueous) binder resin in the composition of the first embodiment of the present invention is a content such that the adhesive property of a material obtained by using the composition of the first embodiment of the present invention is not impaired. Specifically, for example, the content of a (aqueous) binder resin in the composition of the first embodiment of the present invention is equal to or less than 30 % by weight, more preferably, equal to or less than 10 % by weight, of the content of solid contained in the composition of the first embodiment of the present invention.

According to need, the composition of the first embodiment of the present invention may contain an additive such as hardening agents, preservatives, dyes, developers for dyes, pH adjustors, and antifoaming agent.

### [Method of manufacturing a composition]

The second embodiment of the present invention is a method of manufacturing a composition, for manufacturing a composition which contains a plasticizer for plasticizing a thermoplastic resin and a surfactant, wherein a surfactant having a clouding point equal to or higher than 50 °C is used. In other words, a method of manufacturing a composition, of the second embodiment of the present invention, is a method of manufacturing a composition of the first embodiment of the present invention. Therefore, the composition of the first embodiment of the present invention, as described above, can be applied to a method of manufacturing a composition of the second embodiment of the present invention.

For example, according to the second embodiment of the present invention, in a method of manufacturing a composition, for manufacturing a composition which contains a plasticizer for plasticizing a thermoplastic resin and a surfactant, since the composition of the first embodiment of the present invention as described above can be manufactured by using a surfactant having a clouding point equal to or higher than 50 °C similarly to the composition of the first embodiment of the present invention as described above, a method of manufacturing a composition capable of dispersing a plasticizer more stably can be provided.

Preferably, the method of manufacturing a composition of the second embodiment of the present invention includes mixing at least the plasticizer and the surfactant at a rotational speed equal to or greater than 1, 500 rotations / minute. More preferably, the method of manufacturing a composition of the second embodiment of the present invention includes mixing at least the plasticizer and the surfactant at a rotational speed equal to or greater than 2,000 rotations / minute, and further preferably, includes mixing at least the plasticizer and the surfactant at a rotational speed equal to or greater than 2,500 rotations / minute.

When the method of manufacturing a composition of the second embodiment of the present invention includes mixing at least the plasticizer and the surfactant at a rotational speed equal to or greater than 1,500 rotations / minute, for example, since the plasticizer can be more highly dispersed in a composition manufactured by the method of manufacturing a composition of the second embodiment of the present invention, a time period required for making the size of a plasticizer particle contained in a composition manufactured by the method of manufacturing a composition of the second embodiment of the present invention be a predetermined size can be shorter.

Preferably, the method of manufacturing a composition of the second embodiment of the present invention includes a step of mixing at least the plasticizer and a part of the surfactant to obtain a mixture and a step of mixing a residual part of the surfactant into the mixture to obtain the composition.

When the method of manufacturing a composition of the second embodiment of the present invention includes a step of mixing at least the plasticizer and a part of the surfactant to obtain a mixture and a step of mixing a residual part of the surfactant into the mixture to obtain the composition, the plasticizer can be dispersed more stably.

As a result, for example, a time period required for making the size of a plasticizer particle contained in a composition manufactured by the method of manufacturing a composition of the second embodiment of the present invention be a predetermined size can be shorter. Also, when the method of manufacturing a composition of the second embodiment of the present invention includes a step of mixing at least the plasticizer and a part of the surfactant to obtain a mixture and a step of mixing a residual part of the surfactant into the mixture to obtain the composition, for example, the viscosity of the composition of the first embodiment of the present invention can be more lowered (the fluidity of the composition of the first embodiment of the present invention can be more improved).

Also, when a composition manufactured by the method of manufacturing a composition according to the second embodiment of the present invention is liquid and the method of manufacturing a composition of the second embodiment of the present invention includes a step of mixing at least a plasticizer and a part of a surfactant to obtain a mixture and a step of mixing a residual part of the surfactant into the mixture to obtain the composition, for example, the adhesive strength of a material obtained from a composition manufactured by the method of manufacturing a composition according to the second embodiment of the present invention can be improved. Further, for example, the characteristic of printing on a material obtained from a composition manufactured by the method of manufacturing a composition according to the second embodiment of the present invention can be improved.

Additionally, as a method for increasing dispersion energy in order to shorten a time period required for making the size of a plasticizer particle contained in a composition manufactured by the method of manufacturing a composition according to the second embodiment of the present invention be a predetermined size, there can be considered a method of increasing the quantity of dispersion media such as glass beads and zirconia beads which are added into a mixture of raw materials of the composition, a method of increasing shearing for dispersion which is applied to a mixture of raw materials of the composition, and a method of increasing the retention time of a mixture of raw materials of the composition in a container, but, since any of these methods often generate high dispersion energy, a heat quantity imparted on the plasticizer and the surfactant increases. Then, when the temperature of the composition containing a plasticizer and a surfactant is higher than the clouding point of the surfactant, a local phase separation of the surfactant or the degradation of the ability of the surfactant to disperse a plasticizer may occur and it may be difficult to disperse a plasticizer more stably.

On the other hand, the method of manufacturing a composition of the second embodiment of the present invention includes a step of mixing at least a plasticizer and a part of a surfactant to obtain a mixture and a step of mixing a residual part of the surfactant into the mixture to obtain the composition, whereby the plasticizer can be dispersed more stably and a time period required for making the size of a plasticizer particle contained in a composition manufactured by the method of manufacturing a composition according to the second embodiment of the present invention be a predetermined size can be shorter.

In the method of manufacturing a composition of the second embodiment of the present invention, the ratio of the quantity of a part of surfactant mixed in the step of mixing at least a plasticizer and a part of a surfactant to obtain a mixture to the total quantity of surfactant mixed in both the step of mixing at least a plasticizer and a part of a surfactant to obtain a mixture and the step of mixing a residual part of the surfactant into the mixture to obtain the composition, is preferably equal to or more than 30 % by weight and equal to or less than 70 % by weight, more preferably, equal to or more than 40 % by weight and equal to or less than 60 % by weight.

Additionally, when the plasticizer is a solid plasticizer, the residual part of a surfactant mixed in the step of mixing a residual part of the surfactant into the mixture to obtain the composition may be added into a mixture obtained in the step of mixing at least a plasticizer and a part of a surfactant to obtain a mixture, that is, a mixture in which a solid plasticizer is dispersed to some extent. Therefore, the residual part of surfactant mixed in the step of mixing a residual part of the surfactant into the mixture to obtain the composition is added, preferably, as a dispersion liquid in which a solid plasticizer pulverized to some extent is dispersed. In this case, the solid plasticizer pulverized to some extent is, for example, a solid plasticizer having a median particle diameter equal to or less than 5.00 µm, more preferably, a solid plasticizer having a median particle diameter equal to or greater than 2.00 µm and equal to or less than 3.50 µm. Additionally, the median particle diameter of a solid plasticizer is measured by using a HORIBA LA-920 available from HORIBA, Ltd., which is a laser diffraction /scattering - type particle size distribution analyzer, in accordance with a HORIBA LA-920 particle diameter measuring procedures described in a manual appended to HORIBA LA-920. Additionally, in regard to conditions for the measurement of the median particle diameter of a solid plasticizer by HORBA LA-920, a dispersive medium for dispersing a solid plasticizer is water and a dispersed system of a solid plasticizer in water is obtained by dispersing the solid plasticizer in water at ordinary temperature (20 °C ± 15 °C, for example, 20 °C). Herein, the concentration of a solid plasticizer in water is a concentration such that the transmittance of light transmitting a dispersed system of the solid plasticizer in water is equal to or greater than 80 % and equal to or less than 95 % (for example, 90.0 %). Further, the obtained dispersed system is irradiated with supersonic waves for 30 seconds at a supersonic wave intensity of scale 5 in HORIBA LA-920. The median value of a volumetric distribution of solid plasticizer particles in the dispersed system is defined as the median particle diameter of a solid plasticizer.

Also, in the method of manufacturing a composition of the second embodiment of the present invention, preferably, 0.025 % by weight or more of the surfactant is contained in the composition, similarly to the composition of the first embodiment of the present invention. Also, in the method of manufacturing a composition of the second embodiment of the present invention, preferably, 0.250 % by weight or less of the surfactant is contained in the composition, similarly to the composition of the first embodiment of the present invention. More preferably, in the method of manufacturing a composition of the second embodiment of the present invention, 0.025 % by weight or more and 0.250 % by weight or less of the surfactant is contained in the composition, similarly to the composition of the first embodiment of the present invention. Additionally, when a method of manufacturing a composition of the second embodiment of the present invention includes a step of mixing at least a plasticizer and a part of a surfactant to obtain a mixture and a step of mixing a residual part of the surfactant into the mixture to obtain the composition, the content of the surfactant is a content of surfactant which is finally contained in a composition manufactured by the method of manufacturing a composition of the second embodiment of the present invention (the total of surfactant mixed in respective steps).

Further, in the method of manufacturing a composition of the second embodiment of the present invention, preferably, a diol-type surfactant is used, similarly to the composition of the first embodiment of the present invention. In addition, the method of manufacturing a composition of the second embodiment of the present invention, preferably, includes containing a thermoplastic resin in the composition, similarly to the composition of the first embodiment of the present invention. Additionally, in the method of manufacturing a composition of the second embodiment of the present invention, at least one of various additives such as an adhesive property improving agent may be contained which can be added into the composition of the first embodiment of the present invention, similarly to the composition of the first embodiment of the present invention.

The third embodiment of the present invention is a composition which is manufactured by the method of manufacturing a composition of the second embodiment of the present invention.

According to the third embodiment of the present invention, since a composition of the third embodiment of the present invention is manufactured by the method of manufacturing a composition of the second embodiment of the present invention as described above, a composition capable of dispersing a plasticizer more stably can be provided.

### [Heat-sensitive adhesive material]

The fourth embodiment of the present invention is a heat-sensitive adhesive material which exerts an adhesive property thereof by heating, characterized by having a layer which contains a thermoplastic resin, a plasticizer for plasticizing the thermoplastic resin and a surfactant having a clouding point equal to or higher than 50 °C.

Herein, the thermoplastic resin, the plasticizer for plasticizing a thermoplastic resin, and a surfactant having a clouding point equal to or higher than 50 °C are similar to those described for the composition of the first embodiment of the present invention. Also, in the heat-sensitive adhesive material according to the fourth embodiment of the present invention, the layer containing a thermoplastic resin, a plasticizer for plasticizing the thermoplastic resin, and a surfactant having a clouding point equal to or higher than 50 °C may further contain at least one of various additives such as an adhesive property improving agent which can be added into the composition of the first embodiment of the present invention.

In the heat-sensitive adhesive material of the fourth embodiment of the present invention, preferably, the surfactant is a diol-type surfactant, similarly to that described for the composition of the first embodiment of the present invention.

Also, the heat-sensitive adhesive material according to the fourth embodiment of the present invention normally has a supporter for supporting the layer containing a thermoplastic resin, a plasticizer for plasticizing the thermoplastic resin and a surfactant having a clouding point equal to or higher than 50 °C.

The fifth embodiment of the present invention is a heat-sensitive adhesive material which exerts an adhesive property thereof by heating, which comprises a layer obtained by drying the composition of the first embodiment of the present invention which further contains a thermoplastic resin or the composition of the third embodiment of the present invention.

In the heat-sensitive adhesive material according to the fifth embodiment of the present invention, the layer obtained by drying the composition of the first embodiment of the present invention which further contains a thermoplastic resin or the composition of the third embodiment of the present invention may further contain at least one of various additives such as an adhesive property improving agent which can be added into the composition of the first embodiment of the present invention.

Also, the heat-sensitive adhesive material according to the fifth embodiment of the present invention normally includes a supporter for supporting the layer obtained by drying the composition of the first embodiment of the present invention which further contains a thermoplastic resin or the composition of the third embodiment of the present invention, as also described for the heat-sensitive adhesive material according to the fourth embodiment of the present invention.

In the heat-sensitive adhesive material according to the fifth embodiment of the present invention, when the composition of the first embodiment of the present invention which further contains a thermoplastic resin or the composition of the third embodiment of the present invention is liquid, such a composition is coated on a supporter thereof. As a coating method for coating such a composition on a supporter, for example, there can be provided a blade coating method, a gravure coating method, a gravure offset coating method, a bar coating method, a roll coating method, a knife coating method, an air knife coating method, a comma coating method, a U-comma coating method, an AKKU coating method, a smoothing coating method, a microgravure coating method, a reverse roll coating method, a four or five roll coating method, a dip coating method, a falling curtain coating method, a slide coating method, and a dye coating method.

Also, in the heat-sensitive adhesive material according to the fifth embodiment of the present invention, a drying device and drying method for drying the composition of the first embodiment of the present invention which further contains a thermoplastic resin or the composition of the third embodiment of the present invention are preferably a drying device and drying method using hot air, respectively. When the drying device or drying method using hot air is used, drying for a shorter time period is allowed. Preferably, the temperature of hot air is adjusted such that the surface temperature of a supporter on which the composition of the first embodiment of the present invention which further contains a thermoplastic resin or the composition of the third embodiment of the present invention is coated is equal to or less than 70 °C. In this case, the adhesive property of the surface of a layer obtained by drying the composition of the first embodiment of the present invention which further contains a thermoplastic resin or the composition of the third embodiment of the present invention, at the time of drying, can be suppressed or prevented.

In the heat-sensitive adhesive material according to the fourth embodiment of the present invention or the heat-sensitive adhesive material according to the fifth embodiment of the present invention, a supporter for supporting a layer containing a thermoplastic resin, a plasticizer for plasticizing the thermoplastic resin and a surfactant having a clouding point equal to or higher than 50 °C, or a supporter for supporting a layer obtained by drying the composition of the first embodiment of the present invention which further contains a thermoplastic resin or the composition of the third embodiment of the present invention, may be, for example, a base paper which contains a wood-pulp and a loading material. The base paper may be a base paper based on a wood-pulp and a loading material (the total content of the wood-pulp and the loading material in the base paper is equal to or more than 90 % by weight). Also, a base paper as a supporter can be manufactured by using an apparatus such as a fourdrinier paper machine, a cylinder paper machine, and a twin wire paper machine. Further, a base paper as a supporter can be sheet-made under an acidic, neutral or alkaline condition. In addition, an on-machine treatment may be applied to the base paper by using calendering equipment having a metal roll and a synthetic resin roll. Then, an off-machine treatment may be applied to the base paper, and after the treatment, a calender treatment may be applied to the base paper by using an apparatus such as a machine calender and a super calender, so as to adjust the flatness of the base paper.

As a wood-pulp for a raw material of a base paper, for example, pulps such as chemical pulps such as LBKP and NBKP; mechanical pulps such as GP, PGW, RMP, TMP, CTMP, CMP, and CGP; and recycled fibers such as DIP can be provided. According to need, at least one kind of additive selected from the group including publicly known pigments, binders, sizing agents, adhesion promoters, yield improving agents, cationizing agents, and paper strength additives may be mixed in the base paper.

As a loading material contained in a base paper, for example, there can be provided white inorganic pigments such as a precipitated calcium carbonate light, a calcium carbonate heavy, kaolin, talc, calcium sulfate, barium sulfate, titanium dioxide, zinc oxide, zinc sulfide, satin white, aluminum silicate, diatomaceous earth, calcium silicate, magnesium silicate, synthetic silica, aluminum hydroxide, alumina, lithopone, zeolite, magnesium carbonate, and magnesium hydroxide; and organic pigments such as styrenic plastic pigments, acrylic plastic pigments, polyethylene, a microcapsule, urea resins and melamine resins.

In the heat-sensitive adhesive material according to the fourth embodiment of the present invention, the surface density of a layer supported by a supporter which layer contains a thermoplastic resin, a plasticizer for plasticizing the thermoplastic resin and a surfactant having a clouding point equal to or higher than 50 °C is preferably equal to or greater than 5 g/m² and equal to or less than 30 g/m², more preferably equal to or greater than 7 g/m² and equal to or less than 15 g/m². Similarly, in the heat-sensitive adhesive material according to the fifth embodiment of the present invention, the surface density of a layer supported by a supporter which layer is obtained by drying the composition of the first embodiment of the present invention which further contains a thermoplastic resin or the composition of the third embodiment of the present invention is preferably equal to or greater than 5 g/m² and equal to or less than 30 g/m², more preferably equal to or greater than 7 g/m² and equal to or less than 15 g/m².

The heat-sensitive adhesive material according to the fourth embodiment of the present invention preferably includes an underlying layer which contains a thermoplastic resin and a hollow particle(s) between a supporter and a layer containing a thermoplastic resin, a plasticizer for plasticizing the thermoplastic resin and a surfactant having a clouding point equal to or higher than 50 °C. Similarly, the heat-sensitive adhesive material according to the fifth embodiment of the present invention includes an underlying layer which contains a thermoplastic resin and a hollow particle(s) between a supporter and a layer obtained by drying the composition of the first embodiment of the present invention which further contains a thermoplastic resin or the composition of the third embodiment of the present invention. Preferably, the underlying layer is based on a thermoplastic resin and a hollow particle(s) (the total content of the thermoplastic resin and the hollow particle(s) in the underlying layer is equal to or more than 90 % by weight).

When the heat-sensitive adhesive material according to the fourth embodiment of the present invention or the heat-sensitive adhesive material according to the fifth embodiment of the present invention includes an underlying layer, it can be suppressed by an underlying layer to transmit heat to a supporter which heat is applied to a layer containing a thermoplastic resin, a plasticizer for plasticizing the thermoplastic resin and a surfactant having a clouding point equal to or higher than 50 °C or a layer obtained by drying the composition according to the first embodiment of the present invention which further contains a thermoplastic resin or the composition of the third embodiment of the present invention. That is, heat applied to the heat-sensitive adhesive material can be utilized more effectively for the exertion of the adhesive property of a layer containing a thermoplastic resin, a plasticizer for plasticizing the thermoplastic resin and a surfactant having a clouding point equal to or higher than 50 °C or a layer obtained by drying the composition of the first embodiment of the present invention which further contains a thermoplastic resin or the composition of the third embodiment of the present invention. Therefore, the adhesive property of a layer containing a thermoplastic resin, a plasticizer for plasticizing the thermoplastic resin and a surfactant having a clouding point equal to or higher than 50 °C or a layer obtained by drying the composition of the first embodiment which further contains a thermoplastic resin or the composition of the third embodiment of the present invention, can be more improved.

The thermoplastic resin contained in the underlying layer is a resin for fixing the hollow particle(s) in the underlying layer and, for example, there can be provided cellulose derivatives such as hydroxyethyl cellulose, methyl cellulose, ethyl cellulose, and carboxymethyl cellulose; proteins such as casein and gelatin; aqueous natural polymer compounds including starches such as oxidized starches and ester compound starches; water-soluble synthetic polymer compounds such as poly(vinyl alcohol), modified poly(vinyl alcohol)s, poly(vinylpyrolidone), poly(acrylic acid), poly(sodium acrylate), acrylamide - acrylic acid ester copolymers, acrylamide - acrylic acid ester - methacrylic acid terpolymers, alkali salts of styrene - maleic anhydride copolymer, poly(acrylamide) and styrene - maleic anhydride copolymer; water-soluble adhesive resins such as alkali salts of ethylene - maleic anhydride copolymer; and latexes such as poly(vinyl acetate), polyurethanes, poly(acrylic acid ester)s, styrene - butadiene copolymer, acrylonitrile - butadiene copolymer, methyl acrylate - butadiene copolymer, acrylonitrile - butadiene - acrylic acid copolymer, and ethylene - vinyl acetate copolymer. The thermoplastic resin contained in the underlying layer is preferably 2-ethylhexyl acrylate, and in this case, the adhesive property of the underlying layer can be improved.

As a hollow particle contained in the underlying layer, for example, a hollow particle made of a polymer compound such as acrylic polymers and vinylidene chloride-type polymers can be provided.

The form of the heat-sensitive adhesive material according to the fourth embodiment of the present invention or heat-sensitive adhesive material according to the fifth embodiment of the present invention is not particularly limited and may be a roll-shape. When the form of the heat-sensitive adhesive material is a roll-shape, the heat-sensitive adhesive material can be more easily attached to a printer, etc. Also, the heat-sensitive adhesive material having a roll shape may have or may not have a core penetrating through the center of the cross section of the roll. However, since the core is to be discarded when the heat-sensitive adhesive material has been completely used, it is preferable that the heat-sensitive adhesive material does not have a core penetrating the center of the cross section of the roll.

The heat-sensitive adhesive material according to the fourth embodiment of the present invention or the heat-sensitive adhesive material according to the fifth embodiment of the present invention exert the adhesive property of the heat-sensitive adhesive material by heating the heat-sensitive adhesive material.

Herein, as a method for exerting the adhesive property of the heat-sensitive adhesive material according to the fourth embodiment of the present invention or heat-sensitive adhesive material according to the fifth embodiment of the present invention (which may be called activation of a heat-sensitive adhesive material, below), a hot air activation method, a heated roll activation method and a thermal head activation method can be provided. However, an activation method using a thermal head is preferable from the viewpoint of electrical power saving in the activation of a heat-sensitive adhesive material, the compactness of an apparatus for the activation of a heat-sensitive adhesive material and safety in the activation of a heat-sensitive adhesive material. As an activation method using a thermal head, there can be provided, for example, activation methods disclosed in Japanese Laid-Open Patent Application No. 11-65451, Japanese Laid-Open Patent Application No. 11-79152, Japanese Laid-Open Patent Application No. 2001-88329, Japanese Laid-Open Patent Application No. 2001-88814, Japanese Laid-Open Patent Application No. 2003-316265, and Japanese Laid-Open Patent Application No. 2004-10710.

According to the fourth embodiment of the present invention or the fifth embodiment of the present invention, a heat-sensitive adhesive material capable of having better adhesive property can be provided. For example, according to the fourth embodiment of the present invention or the fifth embodiment of the present invention, a heat-sensitive adhesive material which never exerts or substantially does not exert the adhesive property thereof at ordinary temperature but exerts the adhesive property thereof by heating and requires no strippable member can be provided.

### [Information recording medium]

The sixth embodiment of the present invention is an information recording material capable of recording information, which includes the heat-sensitive adhesive material of the fourth embodiment of the present invention or the heat-sensitive adhesive material of the fifth embodiment of the present invention.

The kind, form, and use of an information recording medium capable of recording information are not particularly limited, and as an information recording medium capable of recording information, for example, there can be provided adhesive sheets for label such as labels for displaying price, labels for indicating a product (bar code), labels for indicating quality, labels for indicating a measured quantity, and labels (stickers) for advertising and general publicity.

According to the sixth embodiment of the present invention, since the heat-sensitive adhesive material of the fourth embodiment of the present invention or the heat-sensitive adhesive material of the fifth embodiment of the present invention is included, an information recording medium capable of having a better adhesive property can be provided. Fir example, according to the sixth embodiment of the present invention, an information recording material which never exerts or substantially does not exert the adhesive property thereof at ordinary temperature but exerts the adhesive property thereof by heating and requires no strippable member can be provided.

For example, whereas a conventional adhesive sheet for label has a stack of an information recording face, a adhesive layer and a strippable paper in which the strippable paper is removed and the adhesive layer is pressurized when the adhesive sheet for label is applied, an adhesive sheet for label which does not exert the adhesive property thereof at ordinary temperature but exerts the adhesive property thereof by heating and requires no strippable paper can be provided. Therefore, an adhesive sheet for label can be provided which uses no strippable paper which is difficult to be recovered or recycled and has been discarded in most cases.

An information recording method for recording information on an information recording medium capable of recording information is not particularly limited, and, as an information recording method for recording information on an information recording medium, for example, there can be provided an ink jet recording method, a heat-sensitive recording method, and a pressure-sensitive recording method.

Preferably, the information recording medium of the sixth embodiment of the present invention further includes a heat-sensitive recording material capable of recording information by heating. In this case, the information recording material includes both the heat-sensitive adhesive material and a heat-sensitive recording material. For example, an information recording medium can be provided which has a heat-sensitive adhesive material at one side of a supporter and has a heat-sensitive recording material at the other side of the supporter.

The heat-sensitive recording material contains a leuco dye and a developer, as generally used for a heat-sensitive recording paper or a pressure-sensitive recording paper. The leuco dye and the developer are not particularly limited.

As a basic leuco dye, for example, there can be provided fluorane-type compounds, triarylmethane-type compounds, spiro-type compounds, diphenylmethane-type compounds, thiazine-type compounds, lactam-type compounds, and fluorine-type compounds. It is preferable that the basic leuco dye shows an absorption spectrum with at least one maximal absorption peak in a wavelength range of 500 nm to 1000 nm.

As a fluorane-type compound, for example, there can be provided 3-diethylamino-6-methyl-7-anilinofluorane, 3-dibutylamino-6-methyl-7-anilinofluorane, 3-(N-methyl-N-cyclohexylamino)-6-methyl-7-anilinofluorane, 3-(N-ethyl-N-isopentylamino)-6-methyl-7-anilinofluorane, 3-(N-isobutyl-N-ethylamino)-6-methyl-7-anilinofluorane, 3-[N-ethyl-N-(3-ethoxypropyl)amino]-6-methyl-7-anilinofluorane, 3-(N-ethyl-N-hexylamino)-6-methyl-7-anilinofluorane, 3-dipentylamino-6-methyl-7-anilinofluorane, 3-(N-methyl-N-propylamino)-6-methyl-7-anilinofluorane, 3-(N-ethyl-N-tetrahydrofurylamino)-6-methyl-7-anilinofluorane, 3-diethylamino-6-methyl-7-(p-chloroanilino)fluorane, 3-diethylamino-6-methyl-7-(p-fluoroanilino)fluorane, 3-(p-toluidinoethylamino)-6-methyl-7-anilinofluorane, 3-diethylamino-6-methyl-7-(p-toluidino)fluorane, 3-diethylamino-7-(3,4-dichloroanilino)fluorane, 3-pyrrolidino-6-methyl-7-anilinofluorane, 3-diethylamino-6-chloro-7-ethoxyethylaminofluorane, 3-diethylamino-6-chloro-7-anilinofluorane, 3-diethylamino-7-phenylfluorane and 3-(p-toluidinoethylamino)-6-methyl-7-phenethylfluorane.

As a triarylmethane-type compound, for example, there can be provided 3,3-bis(p-dimethylaminophenyl)-6-dimethylaminophthalide (synonym: crystalvioletlactone or CVL), 3,3-bis(p-dimethylaminophenyl)phthalide, 3-(p-dimethylaminophenyl)-3-(1,2-dimethylaminoindole-3-yl)phthalide, 3-(p-dimethylaminophenyl)-3-(2-methylindole-3-yl)phthalide, 3-(p-dimethylaminophenyl)-3-(2-phenylindole-3-yl)phthalide, 3,3-bis(1,2-dimethylindole-3-yl)-5-dimethylaminophthalide, 3,3-bis(1,2-dimethylindole-3-yl)-6-dimethylaminophthalide, 3,3-bis(9-ethylcarbazole-3-yl)-5-dimethylaminophthalide, 3,3-(2-phenylindole-3-yl)-5-dimethylaminophthalide and 3-p-dimethylaminophenyl-3-(1-methylpyrrole-2-yl)-6-dimethylaminophthalide.

As a spiro-type compound, for example, there can be provided 3-methylspirodinaphthopyrane, 3-ethylspirodinaphthopyrane, 3,3'-dichlorospirodinaphthopyrane, 3-benzylspirodinaphthopyrane, 3-propylspirobenzopyrane, 3-methylnaphtho-(3-methoxybenzo)spiropyrane and 1,3,3-trimethyl-6-nitro-8'-methoxyspiro(indoline-2,2'-benzopyrane).

As a diphenylmethane-type compound, for example, there can be provided N-halophenylleucoauramine (halo represents chloro, bromo, or iodo.), 4,4-bis-dimethylaminophenylbenzhydrylbenzylether and N-2,4,5-trichlorophenylleucoauramine.

As a thiazine-type compound, for example, there can be provided benzoylleucomethylene blue and p-nitrobenzoylleucomethylene blue.

As a lactam compound, for example, there can be provided rhodamine B anilinolactam and rhodamine B-p-chloroanilinolactam.

As a fluorene-type compound, for example, there can be provided 3,6-bis(dimethylamino)fluorenespiro(9,3')-6'-dimethylaminophthalide, 3,6-bis(dimethylamino)fluorenespiro(9,3')-6'-pyrrolidinophthalide and 3-dimethylamino-6-diethylamino fluorenespiro(9,3')-6'-pyrrolidinophthalide.

Also, as a color basic leuco dye, there can be provided 3-diethylamino-6-methyl-7-chlorofluorane, 3-cyclohexylamino-6-chlorofluorane, 3-diethylamino-benzo[α]fluorane, 3-dibutylamino-benzo[α]fluorane, 3-diethylamino-7-chlorofluorane, 3-diethylamino-7-methylfluorane, 3-N-ethyl-N-isoamylamino-benzo[α]fluorane, 3-N-ethyl-N-p-methylphenylamino-7-methylfluorane, 3-diethylamino-6,8-dimethylfluorane, 3-dibutylamino-6-methyl-7-bromofluorane, 3,6-bis(diethylaminofluorane)-γ-(4'-nitro)anilinolactam, bis(1-n-butyl-2-methylindole-3-yl)phthalide, bis(1-ethyl-2-methylindole-3-yl)phthalide, 3-(4-diethylaminophenyl)-3-(1-ethyl-2-methylindolyl-3-yl)phthalide, 3-(4-diethylamino-2-ethoxyphenyl)-3-(1-ethyl-2-methylindolyl-3-yl)-4-azaphthalide, 3-(4-diethylaminophenyl)-3-(1-methyl-2-methylindolyl-3-yl)phthalide, 3-(4-diethylamino-2-methylphenyl)-3-(1-ethyl-2-methylindolyl-3-yl)phthalide, 3,3-bis(4-dimethylaminophenyl)-6-diethylaminophthalide, 3,7-bis(4-dimethylamino)-10-benzolylphenothiazine, 3,3-bis(4-diethylamino-6-ethoxyphenyl)-4-azaphthalide, 3-diethylamino-7-dianilinofluorane, 3-N-ethyl-N-4-methylphenylamino-7-N-methylanilinofluorane, 3-diethylamino-7-N-dibenzylaminofluorane, 3,6-dimethoxyfluorane, 3,6-dibutoxyfluorane, 3'-methoxy-4'-lanoxyphenyl-2-citrylquinoline and 2',4'-dioctoxyphenyl-2-citrylquinoline.

As a developer, for example, there can be provided phenolic compounds such as bis(3-allyl-4-hydroxyphenyl)sulfone, α-naphthol, β-naphthol, p-octylphenol, 4-t-octylphenol, p-t-butylphenol, p-phenylphenol, 1,1-bis(p-hydroxyphenyl)propane, 2,2-bis(p-hydroxyphenyl)propane(synonym: bisphenol A or BPA), 2,2-bis(p-hydroxyphenyl)butane, 1,1-bis(p-hydroxyphenyl)cyclohexane, 4,4'-thiobisphenol, 4,4'-cyclohexylidenediphenol, 2,2'-(2,5-dibromo-4-hydroxyphenyl)propane, 4,4-isopropylidenebis(2-t-butylphenol), 2,2'-methylenebis(4-chlorophenol), 4,4'-dihydroxydiphenylsulfone, 4-hydroxy-4'-methoxydiphenylsulfone, 4-hydroxy-4'-ethoxydiphenylsulfone, 4-hydroxy-4'-isopropoxydiphenyl sulfone, 4-hydroxy-4'-butoxydiphenylsulfone, methyl bis-(4-hydroxyphenyl)acetate, butyl bis-(4-hydroxyphenyl)acetate, benzyl bis-(4-hydroxyphenyl)acetate, 2,4-dihydroxy-2'-methoxybenzanilide, etc.; and aromatic carboxylic acid derivatives, aromatic carboxylic acids and metal salts thereof, such as benzyl p-hydroxybenzoate, ethyl p-hydroxybenzoate, dibenzyl 4-hydroxyphthalate, dimethyl 4-hydroxyphthalate, ethyl 5-hydroxyisophthalate, 3,5-di-t-butylsalicylic acid and 3,5-di-α-methylbenzylsalicylic acid.

The heat-sensitive recording material may contain a binder resin. As a binder resin contained in the heat-sensitive recording material, a resin similar to a thermoplastic resin contained in the underlying layer can be provided.

The heat-sensitive recording material may contain a sensitizing agent for improving the sensitivity of information recording by heating. As a sensitizing agent, for example, there can be provided waxes such as N-hydroxymethylstearamide, stearamide and palmitamide; naphthol derivatives such as 2-benzyloxynaphthalene; biphenyl derivatives such as acetylbiphenyl, p-benzylbiphenyl and 4-allyloxybiphenyl; polyether compounds such as 1,2-bis(3-methylphenoxy)ethane, 2,2'-bis(4-methoxyphenoxy)diethyl ether and bis(4-methoxyphenyl)ether; and carbonic acid diester derivatives and oxalic acid diester derivatives, such as diphenyl carbonate, dibenzyl oxalate, and di(p-chlorobenzyl) oxalate.

Preferably, the information recording medium of the sixth embodiment of the present invention further includes a layer capable of recording information by receiving ink. In this case, the information recording medium includes both the heat-sensitive adhesive material and a layer capable of recording information by receiving ink. For example, an information recording medium having the heat-sensitive adhesive material at one side of a supporter and having a layer capable of recording information by receiving ink at the other side of the supporter can be provided.

The layer capable of recording information by receiving ink preferably contains an inorganic pigment with an oil absorption property for absorbing ink well. As an inorganic pigment with an oil absorption property, for example, there can be provided diatomaceous earth, talc, kaolin, baked kaolin, calcium carbonate, magnesium carbonate, titanium oxide, zinc oxide, silicon oxide, aluminum hydroxide, and urea - formalin resin.

Additionally, the layer capable of recording information by receiving ink may contain a binder resin. As a binder resin contained in the layer capable of recording information by receiving ink, resins similar to the thermoplastic resin contained in the underlying layer can be provided.

When the information recording medium of the sixth embodiment of the present invention includes a layer (ink receiving layer) capable of recording information by receiving ink, for example, information of an ink image obtained by using UV ink is recorded in an ink receiving layer and the heat-sensitive adhesive material is heated, whereby the information recording medium can be adhered. In this case, for example, an information transmission label can be provided on which information that can be sensed by means of UV light is recorded. Also, since the heat-sensitive adhesive material is formed by using a surfactant having a clouding point equal to or higher than 50 °C, a plasticizer is more uniformly dispersed in the heat-sensitive adhesive material. As a result, stripping of the heat-sensitive adhesive material from a supporter thereof (picking phenomenon) at the time of applying UV ink onto the ink receiving layer can be suppressed or prevented. Thus, a high definition ink image can be provided on an ink receiving layer.

As a UV ink, for example, there can be provided Daicure Septer series, Daicure RT series, Daicure SSD series, Daicure Clear UV series, Daicure Clear YW series, and Daicure Clear HP series, available from Dainippon ink and chemicals incorporated; FD Flexo series, FD Karton series, FD Foam series, and FDS series, available from Toyo Ink MFG Co., Ltd.; and UV 161, UV VNL, UV STP, UV RNC, UV NVR, UV SD and UV 171, available from T&K Toka Co., Ltd.

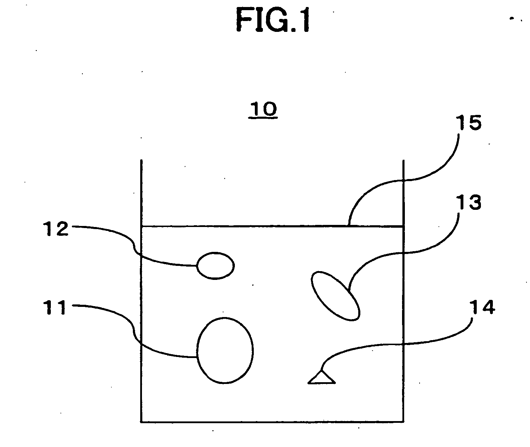

FIG. 1 is a diagram of schematically illustrating an example of a composition according to the first or third embodiment of the present invention. As shown in FIG. 1, heat-sensitive adhesive material coating liquid 10 as a composition according to the first or third embodiment of the present invention contains a thermoplastic resin 11, a solid plasticizer 12, a surfactant 13, an adhesive property improving agent 14 and an aqueous dispersive medium 15. The solid plasticizer 12 is fine particles which can plasticize the thermoplastic resin 11. The surfactant 13 disperses the thermoplastic resin 11, the solid plasticizer 12, the adhesive property improving agent 14, etc., in the aqueous dispersive medium 15. Herein, in the heat-sensitive adhesive material coating liquid 10, the surfactant 13 is a diol-type nonionic surfactant having a clouding point equal to or higher than 50 °C. Then, the content of the surfactant 13 in the heat-sensitive adhesive material coating liquid 10 is equal to or more than 0.025 % by weight and equal to or less than 0.250 % by weight. Additionally, the heat-sensitive adhesive material coating liquid 10 may contain a supercooling accelerator, an anti-blocking material, etc., according to need.

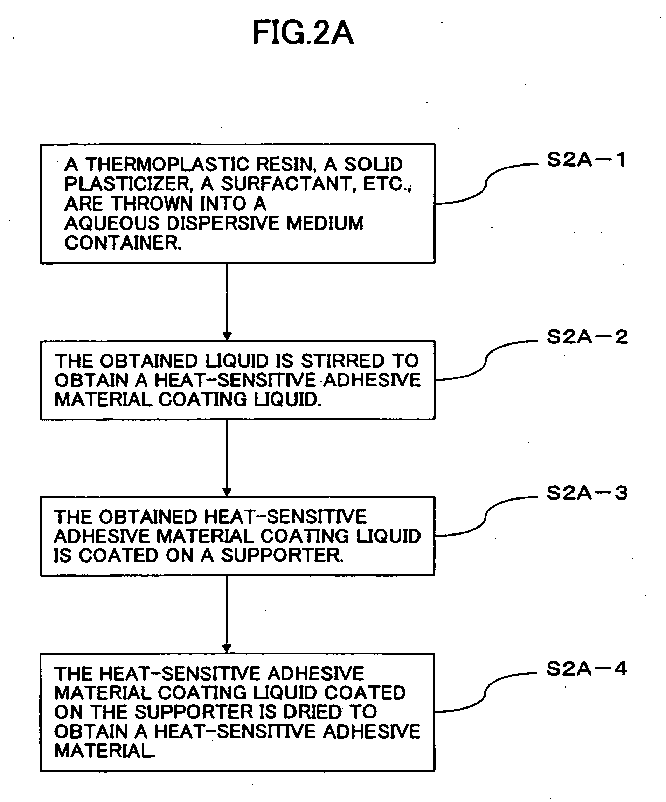

FIG. 2A is a diagram of schematically illustrating the first example of a method of manufacturing a composition according to the second embodiment of the present invention and the first example of a method of manufacturing a heat-sensitive adhesive material according to the fourth or fifth embodiment of the present invention.

As shown in FIG. 2A, the first example of a method of manufacturing a composition according to the second embodiment of the present invention is composed of steps S2A-1 and S2A-2. In step S2A-1, a thermoplastic resin, a solid plasticizer, a surfactant, an adhesive property improving agent, etc., are thrown into an aqueous dispersive medium. In step S2A-1, the surfactant is a diol-type nonionic surfactant having a clouding point equal to or higher than 50 °C, and the quantity of the surfactant is adjusted such that the content of the surfactant in the obtained heat-sensitive adhesive material coating liquid is equal to or more than 0.025 % by weight and equal to or less than 0.250 % by weight. In step S2A-2, the obtained liquid is stirred so as to obtain a heat-sensitive adhesive material coating liquid. In step S2A-2, the thermoplastic resin, the solid plasticizer, the surfactant, the adhesive property improving agent, etc., are stirred and mixed at a rotational speed equal to or greater than 1,500 rotations / minute. In step S2A-2, in the obtained heat-sensitive adhesive material coating liquid, the thermoplastic resin, the solid plasticizer, the adhesive property improving agent, etc., are dispersed in the aqueous dispersive medium.

As shown in FIG. 2A, the first example of a method of manufacturing a heat-sensitive adhesive material according to the fourth or fifth embodiment of the present invention is composed of steps S2A-3 and S2A-4. In step 2A-3, the obtained heat-sensitive adhesive material coating liquid is coated on a supporter for a heat-sensitive adhesive material. In step 2A-4, the heat-sensitive adhesive material coating liquid coated on the supporter is dried so as to obtain a heat-sensitive adhesive material.

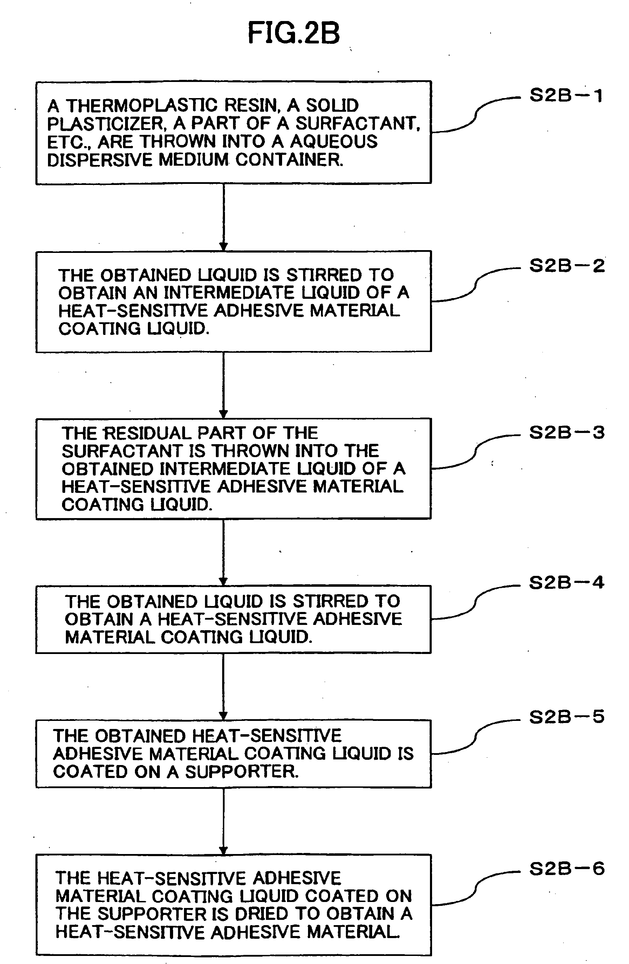

FIG. 2B is a diagram of schematically illustrating the second example of a method of manufacturing a composition according to the second embodiment of the present invention and the second example of a method of manufacturing a heat-sensitive adhesive material according to the fourth or fifth embodiment of the present invention.

As shown in FIG. 2B, the second example of a method of manufacturing a composition according to the second embodiment of the present invention is composed of steps 2B-1 through 2B-4. In step 2B-1, a thermoplastic resin, a solid plasticizer, a part of a surfactant, an adhesive property improving agent, etc., are thrown into an aqueous dispersive medium. In step S2B-1, the surfactant is a diol-type nonionic surfactant having a clouding point equal to or higher than 50 °C. Next, in step S2B-2, the obtained liquid is stirred so as to obtain an intermediate liquid of heat-sensitive adhesive material coating liquid. Next, in step S2B-3, the residual part of the surfactant is thrown into the obtained intermediate liquid of heat-sensitive adhesive material coating liquid. Herein, the quantity of the surfactant thrown in steps S2B-1 and 2B-3 is adjusted such that the content of the surfactant in the obtained heat-sensitive adhesive material coating liquid is equal to or more than 0.025 % by weight and equal to or less than 0.250 % by weight. Next, in step S2B-4, the obtained liquid is stirred so as to obtain a heat-sensitive adhesive material coating liquid. In step S2B-4, in the obtained heat-sensitive adhesive material coating liquid, the thermoplastic resin, the solid plasticizer, the adhesive property improving agent, etc., are dispersed in the aqueous dispersive medium.

As shown in FIG. 2B, the second example of a method of manufacturing a heat-sensitive adhesive material according to the fourth or fifth embodiment of the present invention is composed of steps S2B-5 and S2B-6. In step 2B-5, the obtained heat-sensitive adhesive material coating liquid is coated on a supporter for a heat-sensitive adhesive material. In step 2B-6, the heat-sensitive adhesive material coating liquid coated on the supporter is dried so as to obtain a heat-sensitive adhesive material.

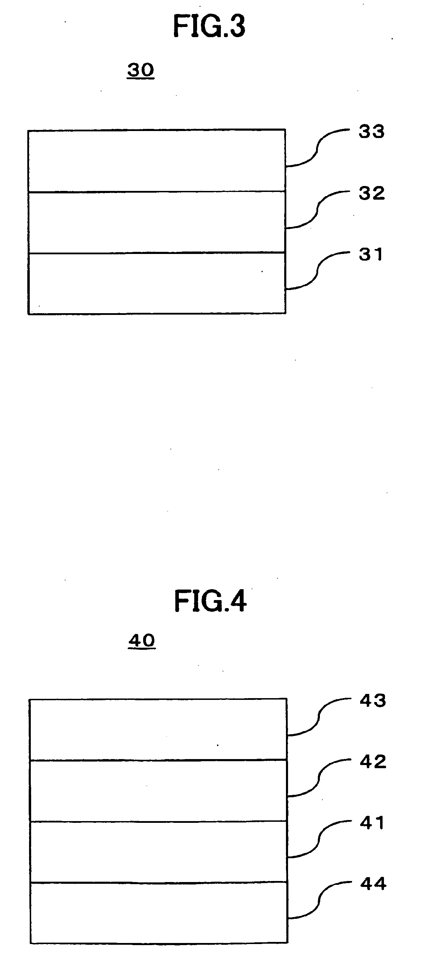

FIG. 3 is a diagram of schematically illustrating an example of a heat-sensitive adhesive material according to the fourth or fifth embodiment of the present invention.

As shown in FIG. 3, a heat-sensitive adhesive material 30 as a heat-sensitive adhesive material according to the fourth or fifth embodiment of the present invention is a material which exerts the adhesive property thereof by heating, and is composed of a supporter 31, an underlying layer 32 provided on the supporter 31 and a heat-sensitive adhesive layer 33 provided on the underlying layer 32. The supporter 31 is a base paper based on a wood-pulp and a loading material. The underlying layer 32 contains a thermoplastic resin and hollow particles. In FIG. 3, the heat-sensitive adhesive layer 33 is a layer containing a thermoplastic resin, a plasticizer for plasticizing the thermoplastic resin and a diol-type non-ionic surfactant having a clouding point equal to or higher than 50 °C, and a layer obtained by drying the heat-sensitive adhesive material coating liquid which is an example of the first or third embodiment of the present invention as shown in FIG. 1.

FIG. 4 is a diagram of schematically illustrating the first example of an information recording medium according to the sixth embodiment of the present invention.

As shown in FIG. 4, an adhesive sheet for label 40 as an information recording material according to the sixth embodiment of the present invention is a material capable of recording information, and is composed of a supporter 41, an underlying layer 42 provided on the supporter 41, a heat-sensitive adhesive layer 43 provided on the underlying layer 42, and a heat-sensitive recording layer 44 provided on the supporter 41 at the opposite side of the underlying layer 42 and the heat-sensitive adhesive layer 43. The supporter 41 is a base paper based on a wood-pulp and a loading material. The underlying layer 42 contains a thermoplastic resin and hollow particles. The heat-sensitive adhesive layer 43 is a layer containing a thermoplastic resin, a plasticizer for plasticizing the thermoplastic resin and a diol-type non-ionic surfactant having a clouding point equal to or higher than 50 °C as shown in FIG. 3, and a layer obtained by drying the heat-sensitive adhesive material coating liquid which is an example of the first or third embodiment of the present invention as shown in FIG. 1. In FIG. 4, the heat-sensitive recording layer 44 as a heat-sensitive recording material capable of recording information by heating contains a leuco dye, a developer, a binder resin, and a sensitizing agent.

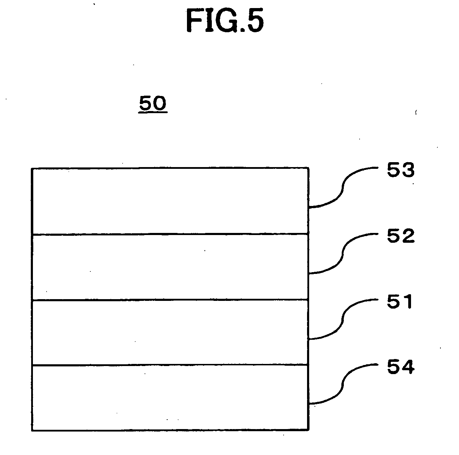

FIG. 5 is a diagram of schematically illustrating the second example of an information recording medium according to the sixth embodiment of the present invention.

As shown in FIG. 5, an adhesive sheet for label 50 as an information recording material according to the sixth embodiment of the present invention is a material capable of recording information, and is composed of a supporter 51, an underlying layer 52 provided on the supporter 51, a heat-sensitive adhesive layer 53 provided on the underlying layer 52, and an ink receiving layer 54 provided on the supporter 51 at the opposite side of the underlying layer 52 and the heat-sensitive adhesive layer 53. The supporter 51 is a base paper based on a wood-pulp and a loading material. The underlying layer 52 contains a thermoplastic resin and hollow particles. The heat-sensitive adhesive layer 53 is a layer containing a thermoplastic resin, a plasticizer for plasticizing the thermoplastic resin and a diol-type non-ionic surfactant having a clouding point equal to or higher than 50 °C as shown in FIG. 3, and a layer obtained by drying the heat-sensitive adhesive material coating liquid which is an example of the first or third embodiment of the present invention as shown in FIG. 1. In FIG. 5, the ink receiving layer 54 as a layer capable of recording information by receiving ink contains an inorganic pigment. On the ink receiving layer 54 in FIG. 5, an ink image formed by UV ink is recorded.

### [Practical examples]

Next, practical examples of the present invention are described in detail. "Part(s)" and "%" in the practical examples of the present invention mean "Part(s) by weight" and "% by weight", respectively.

First, practical examples of a solid plasticizer dispersion liquid and manufacturing method thereof according to the present invention are described with comparison examples of a conventional solid plasticizer dispersion liquid and manufacturing method thereof.

### (1) Preparation of solid plasticizer dispersion liquid

### <Practical example 1>

100 parts of 2-(3'-t-butyl-5'-methyl-2'-hydroxyphenyl)-5-chlorobenzotriazole as a solid plasticizer and 50 parts of carboxy-modified poly(vinyl alcohol) (solid content: 10 %, KL-318, available from Kuraray Co., Ltd.) were added into 200 parts of water. Next, Leox 2008C (a natural alcohol, clouding point: 50 °C, available from Lion Corporation) as a surfactant was further added such that the concentration of the surfactant was 0.02 % of the total weight of an obtained liquid composition, which was 300 g. The obtained liquid composition was uniformly stirred.

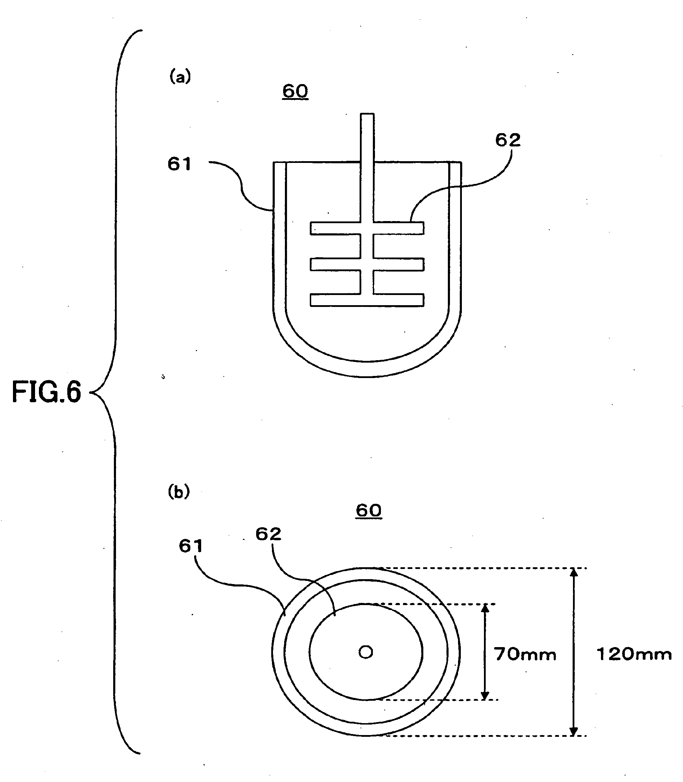

Next, the whole of the stirred liquid composition was thrown into a pot with a metal jacket and a volume of 1,000 ml as shown in FIG.6 and apparent 300 cc of glass beads with a diameter of 1 mm were further added.

FIG. 6 is a diagram of schematically illustrating an apparatus of preparing a solid plasticizer dispersion liquid used in practical examples and comparative examples of the present invention. Herein, FIG. 6(a) is a cross-sectional view of schematically illustrating an apparatus of preparing a solid plasticizer dispersion liquid used in practical examples and comparative examples of the present invention, and FIG. 6(b) is a top view of schematically illustrating an apparatus of preparing a solid plasticizer dispersion liquid used in practical examples and comparative examples of the present invention. The apparatus 60 of preparing a solid plasticizer dispersion liquid shown in FIG. 6 has a pot 61 with a metal jacket and a volume of 1,000 ml and a stirring blade 62 for stirring a liquid composition in the pot with a metal jacket.

While cooling water constantly flowed inside of the metal jacket so that the temperature of the liquid composition in the pot is kept at 18 °C, the liquid composition in the pot was stirred by rotating the stirring blade at a rotational frequency of 1,000 rotations / minute which blade was dipped in the liquid composition in the pot as shown in FIG. 6, thereby preparing a solid plasticizer dispersion liquid of practical example 1.

Herein, the stirring of the liquid composition in the pot was performed until the median particle diameter of a micelle of solid plasticizer reached 1.0 µm. Additionally, the median particle diameter of a micelle of solid plasticizer was measured by using a laser diffraction / scattering - type particle size distribution analyzer (HORIBA LA-920 available from HORIBA, Ltd.).

Also, a dispersion time period of 8.5 hours was needed until the median particle diameter of the micelle of solid plasticizer reached 1.0 µm.

Further, the solid plasticizer dispersion liquid of practical example 1 was visually observed. As a result, no foaming was observed in the solid plasticizer dispersion liquid of practical example 1.

Also, the viscosity of the solid plasticizer dispersion liquid of practical example 1 was measured by using a Dynamic Spectrometer (cone disc viscometer) available from Rheometric Scientific Inc. on the conditions of a rotational frequency of a cone with respect to a disc of 2,500 rotations / minute, radii of the bottom face of the cone and the disc of 12.5 mm, an angle between the conical surface and the disc of 0.04 radians, and a gap between the conical surface and the disc of 0.05 mm. As a result, the viscosity of the solid plasticizer dispersion liquid of practical example 1 was 71 mPa.

### <Practical example 2>

A solid plasticizer dispersion liquid of practical example 2 was prepared similarly to practical example 1 except that Leox 2160C (a natural alcohol, clouding point: 60 °C, available from Lion Corporation) was used as a surfactant instead of Leox 2008C (a natural alcohol, clouding point: 50 °C, available from Lion Corporation) used in practical example 1.

Herein, the median particle diameter of a micelle of solid plasticizer was measured similarly to practical example 1. As a result, in practical example 2, a dispersion time period of 8.2 hours was needed until the median particle diameter of the micelle of solid plasticizer reached 1.0 µm.

Also, the solid plasticizer dispersion liquid of practical example 2 was visually observed. As a result, no foaming was observed in the solid plasticizer dispersion liquid of practical example 2.

Further, the viscosity of the solid plasticizer dispersion liquid of practical example 2 was measured similarly to practical example 1. As a result, the viscosity of the solid plasticizer dispersion liquid of practical example 2 was 56 mPa.

### <Practical example 3>

A solid plasticizer dispersion liquid of practical example 3 was prepared similarly to practical example 1 except that Lionol TD-2007 (monool block type, clouding point: 55 °C, available from Lion Corporation) was used as a surfactant instead of Leox 2008C (a natural alcohol, clouding point: 50 °C, available from Lion Corporation) used in practical example 1.

Herein, the median particle diameter of a micelle of solid plasticizer was measured similarly to practical example 1. As a result, in practical example 3, a dispersion time period of 8.6 hours was needed until the median particle diameter of the micelle of solid plasticizer reached 1.0 µm.

Also, the solid plasticizer dispersion liquid of practical example 3 was visually observed. As a result, no foaming was observed in the solid plasticizer dispersion liquid of practical example 3.

Further, the viscosity of the solid plasticizer dispersion liquid of practical example 3 was measured similarly to practical example 1. As a result, the viscosity of the solid plasticizer dispersion liquid of practical example 3 was 55 mPa.

### <Practical example 4>

A solid plasticizer dispersion liquid of practical example 4 was prepared similarly to practical example 1 except that Lionol TDM-90 (monool block type, clouding point: 59 °C, available from Lion Corporation) was used as a surfactant instead of Leox 2008C (a natural alcohol, clouding point: 50 °C, available from Lion Corporation) used in practical example 1.

Herein, the median particle diameter of a micelle of solid plasticizer was measured similarly to practical example 1. As a result, in practical example 4, a dispersion time period of 7.9 hours was needed until the median particle diameter of the micelle of solid plasticizer reached 1.0 µm.

Also, the solid plasticizer dispersion liquid of practical example 4 was visually observed. As a result, no foaming was observed in the solid plasticizer dispersion liquid of practical example 4.

Further, the viscosity of the solid plasticizer dispersion liquid of practical example 4 was measured similarly to practical example 1. As a result, the viscosity of the solid plasticizer dispersion liquid of practical example 4 was 51 mPa.

### <Practical example 5>

A solid plasticizer dispersion liquid of practical example 5 was prepared similarly to practical example 1 except that RK-103 (diol, clouding point: 50 °C, available from Nissin Chemical Industry Co., Ltd.) was used as a surfactant instead of Leox 2008C (a natural alcohol, clouding point: 50 °C, available from Lion Corporation) used in practical example 1.

Herein, the median particle diameter of a micelle of solid plasticizer was measured similarly to practical example 1. As a result, in practical example 5, a dispersion time period of 8.0 hours was needed until the median particle diameter of the micelle of solid plasticizer reached 1.0 µm.

Also, the solid plasticizer dispersion liquid of practical example 5 was visually observed. As a result, no foaming was observed in the solid plasticizer dispersion liquid of practical example 5.

Further, the viscosity of the solid plasticizer dispersion liquid of practical example 5 was measured similarly to practical example 1. As a result, the viscosity of the solid plasticizer dispersion liquid of practical example 5 was 43 mPa.

### <Practical example 6>

A solid plasticizer dispersion liquid of practical example 6 was prepared similarly to practical example 1 except that RK-70 (diol, clouding point: 53 °C, available from Nissin Chemical Industry Co., Ltd.) was used as a surfactant instead of Leox 2008C (a natural alcohol, clouding point: 50 °C, available from Lion Corporation) used in practical example 1.

Herein, the median particle diameter of a micelle of solid plasticizer was measured similarly to practical example 1. As a result, in practical example 6, a dispersion time period of 8.1 hours was needed until the median particle diameter of the micelle of solid plasticizer reached 1.0 µm.

Also, the solid plasticizer dispersion liquid of practical example 6 was visually observed. As a result, no foaming was observed in the solid plasticizer dispersion liquid of practical example 6.

Further, the viscosity of the solid plasticizer dispersion liquid of practical example 6 was measured similarly to practical example 1. As a result, the viscosity of the solid plasticizer dispersion liquid of practical example 6 was 43 mPa.

### <Practical example 7>

A solid plasticizer dispersion liquid of practical example 7 was prepared similarly to practical example 1 except that RK-105 (diol, clouding point: 58 °C, available from Nissin Chemical Industry Co., Ltd.) was used as a surfactant instead of Leox 2008C (a natural alcohol, clouding point: 50 °C, available from Lion Corporation) used in practical example 1.

Herein, the median particle diameter of a micelle of solid plasticizer was measured similarly to practical example 1. As a result, in practical example 7, a dispersion time period of 7.9 hours was needed until the median particle diameter of the micelle of solid plasticizer reached 1.0 µm.

Also, the solid plasticizer dispersion liquid of practical example 7 was visually observed. As a result, no foaming was observed in the solid plasticizer dispersion liquid of practical example 7.

Further, the viscosity of the solid plasticizer dispersion liquid of practical example 7 was measured similarly to practical example 1. As a result, the viscosity of the solid plasticizer dispersion liquid of practical example 7 was 41 mPa.

### <Practical example 8>

A solid plasticizer dispersion liquid of practical example 8 was prepared similarly to practical example 5 except that the concentration of the surfactant in practical example 5 was changed from 0.02 % of the total weight of the liquid composition to 0.15 % of the total weight of the liquid composition.

Herein, the median particle diameter of a micelle of solid plasticizer was measured similarly to practical example 5. As a result, in practical example 8, a dispersion time period of 3.7 hours was needed until the median particle diameter of the micelle of solid plasticizer reached 1.0 µm.

Also, the solid plasticizer dispersion liquid of practical example 8 was visually observed. As a result, no foaming was observed in the solid plasticizer dispersion liquid of practical example 8.

Further, the viscosity of the solid plasticizer dispersion liquid of practical example 8 was measured similarly to practical example 5. As a result, the viscosity of the solid plasticizer dispersion liquid of practical example 8 was 42 mPa.

### <Practical example 9>

A solid plasticizer dispersion liquid of practical example 9 was prepared similarly to practical example 6 except that the concentration of the surfactant in practical example 6 was changed from 0.02 % of the total weight of the liquid composition to 0.15 % of the total weight of the liquid composition.

Herein, the median particle diameter of a micelle of solid plasticizer was measured similarly to practical example 6. As a result, in practical example 9, a dispersion time period of 3.5 hours was needed until the median particle diameter of the micelle of solid plasticizer reached 1.0 µm.

Also, the solid plasticizer dispersion liquid of practical example 9 was visually observed. As a result, no foaming was observed in the solid plasticizer dispersion liquid of practical example 9.

Further, the viscosity of the solid plasticizer dispersion liquid of practical example 9 was measured similarly to practical example 6. As a result, the viscosity of the solid plasticizer dispersion liquid of practical example 9 was 41 mPa.

### <Practical example 10>

A solid plasticizer dispersion liquid of practical example 10 was prepared similarly to practical example 7 except that the concentration of the surfactant in practical example 7 was changed from 0.02 % of the total weight of the liquid composition to 0.15 % of the total weight of the liquid composition.

Herein, the median particle diameter of a micelle of solid plasticizer was measured similarly to practical example 7. As a result, in practical example 10, a dispersion time period of 3.6 hours was needed until the median particle diameter of the micelle of solid plasticizer reached 1.0 µm.

Also, the solid plasticizer dispersion liquid of practical example 10 was visually observed. As a result, no foaming was observed in the solid plasticizer dispersion liquid of practical example 10.

Further, the viscosity of the solid plasticizer dispersion liquid of practical example 10 was measured similarly to practical example 7. As a result, the viscosity of the solid plasticizer dispersion liquid of practical example 10 was 40 mPa.

### <Practical example 11>

A solid plasticizer dispersion liquid of practical example 11 was prepared similarly to practical example 5 except that the concentration of the surfactant in practical example 5 was changed from 0.02 % of the total weight of the liquid composition to 0.30 % of the total weight of the liquid composition.

Herein, the median particle diameter of a micelle of solid plasticizer was measured similarly to practical example 5. As a result, in practical example 11, a dispersion time period of 4.3 hours was needed until the median particle diameter of the micelle of solid plasticizer reached 1.0 µm.

Also, the solid plasticizer dispersion liquid of practical example 11 was visually observed. As a result, foaming was observed in the solid plasticizer dispersion liquid of practical example 11.

Further, the viscosity of the solid plasticizer dispersion liquid of practical example 11 was measured similarly to practical example 5. As a result, the viscosity of the solid plasticizer dispersion liquid of practical example 11 was 38 mPa.

### <Practical example 12>

A solid plasticizer dispersion liquid of practical example 12 was prepared similarly to practical example 6 except that the concentration of the surfactant in practical example 6 was changed from 0.02 % of the total weight of the liquid composition to 0.30 % of the total weight of the liquid composition.

Herein, the median particle diameter of a micelle of solid plasticizer was measured similarly to practical example 6. As a result, in practical example 12, a dispersion time period of 4.2 hours was needed until the median particle diameter of the micelle of solid plasticizer reached 1.0 µm.

Also, the solid plasticizer dispersion liquid of practical example 12 was visually observed. As a result, foaming was observed in the solid plasticizer dispersion liquid of practical example 12.

Further, the viscosity of the solid plasticizer dispersion liquid of practical example 12 was measured similarly to practical example 6. As a result, the viscosity of the solid plasticizer dispersion liquid of practical example 12 was 40 mPa.

### <Practical example 13>

A solid plasticizer dispersion liquid of practical example 13 was prepared similarly to practical example 7 except that the concentration of the surfactant in practical example 7 was changed from 0.02 % of the total weight of the liquid composition to 0.30 % of the total weight of the liquid composition.

Herein, the median particle diameter of a micelle of solid plasticizer was measured similarly to practical example 7. As a result, in practical example 13, a dispersion time period of 4.4 hours was needed until the median particle diameter of the micelle of solid plasticizer reached 1.0 µm.

Also, the solid plasticizer dispersion liquid of practical example 13 was visually observed. As a result, foaming was observed in the solid plasticizer dispersion liquid of practical example 13.

Further, the viscosity of the solid plasticizer dispersion liquid of practical example 13 was measured similarly to practical example 7. As a result, the viscosity of the solid plasticizer dispersion liquid of practical example 13 was 41 mPa.

### <Practical example 14>

A solid plasticizer dispersion liquid of practical example 14 was prepared similarly to practical example 9 except that the rotational frequency of the stirring blade dipped in the liquid composition in practical example 9 was changed from 1,000 rotations / minute to 3,000 rotations / minute.

Herein, the median particle diameter of a micelle of solid plasticizer was measured similarly to practical example 9. As a result, in practical example 14, a dispersion time period of 3.1 hours was needed until the median particle diameter of the micelle of solid plasticizer reached 1.0 µm.

Also, the solid plasticizer dispersion liquid of practical example 14 was visually observed. As a result, no foaming was observed in the solid plasticizer dispersion liquid of practical example 14.

Further, the viscosity of the solid plasticizer dispersion liquid of practical example 14 was measured similarly to practical example 9. As a result, the viscosity of the solid plasticizer dispersion liquid of practical example 14 was 66 mPa.

### <Practical example 15>

100 parts of 2-(3'-t-butyl-5'-methyl-2'-hydroxyphenyl)-5-chlorobenzotriazole as a solid plasticizer and 50 parts of carboxy-modified poly(vinyl alcohol) (solid content: 10 %, KL-318, available from Kuraray Co., Ltd.) were added into 200 parts of water. Next, RK-70 (diol, clouding point: 53 °C, available from Nissin Chemical Industry Co., Ltd.) as a surfactant was further added such that the concentration of the surfactant was 0.08 % of the total weight of an obtained liquid composition, which was 300 g. The obtained liquid composition was uniformly stirred.

Next, the whole of the stirred liquid composition was thrown into a pot with a metal jacket and a volume of 1,000 ml as shown in FIG.6 and apparent 300 cc of glass beads with a diameter of 1 mm were further added. While cooling water constantly flowed inside of the metal jacket so that the temperature of the liquid composition in the pot is kept at 18 °C, the liquid composition in the pot was stirred by rotating the stirring blade at a rotational frequency of 3,000 rotations / minute which blade was dipped in the liquid composition in the pot as shown in FIG. 6, thereby preparing a solid plasticizer dispersion liquid.

Herein, the stirring of the liquid composition in the pot was performed until the median particle diameter of a micelle of solid plasticizer reached 3.0 µm. Additionally, the median particle diameter of a micelle of solid plasticizer was measured by using a laser diffraction / scattering - type particle size distribution analyzer (HORIBA LA-920 available from HORIBA, Ltd.).

Also, a dispersion time period of 1.6 hours was needed until the median particle diameter of the micelle of solid plasticizer reached 3.0 µm.

Subsequently, RK-70 (diol, clouding point: 53 °C, available from Nissin Chemical Industry Co., Ltd.) as a surfactant was further dropped into the obtained solid plasticizer dispersion liquid such that the concentration of the surfactant was 0.07 % of the total weight of an obtained liquid composition.

Then, while cooling water constantly flowed inside of the metal jacket so that the temperature of the solid plasticizer dispersion liquid in the pot is kept at 18 °C, the solid plasticizer dispersion liquid in the pot was stirred again by rotating the stirring blade at a rotational frequency of 3,000 rotations /minute which blade was dipped in the liquid composition in the pot, thereby preparing a solid plasticizer dispersion liquid of practical example 15.

Herein, the stirring of the solid plasticizer dispersion liquid in the pot was performed until the median particle diameter of a micelle of solid plasticizer reached 1.0 µm. Additionally, the median particle diameter of a micelle of solid plasticizer was measured by using a laser diffraction / scattering - type particle size distribution analyzer (HORIBA LA-920 available from HORIBA, Ltd.).

Also, a dispersion time period of 1.2 hours was needed from the dropping of RK-70 as a surfactant until the median particle diameter of the micelle of solid plasticizer reached 1.0 µm. (A total dispersion time period of 2.8 hours was needed from the initial liquid composition until the median particle diameter of the micelle of solid plasticizer reached 1.0 µm.)

Further, the solid plasticizer dispersion liquid of practical example 15 was visually observed. As a result, no foaming was observed in the solid plasticizer dispersion liquid of practical example 15.

Also, the viscosity of the solid plasticizer dispersion liquid of practical example 15 was measured by using a Dynamic Spectrometer (cone disc viscometer) available from Rheometric Scientific Inc. on the conditions of a rotational frequency of a cone with respect to a disc of 2,500 rotations / minute, radii of the bottom face of the cone and the disc of 12.5 mm, an angle between the conical surface and the disc of 0.04 radians, and a gap between the conical surface and the disc of 0.05 mm. As a result, the viscosity of the solid plasticizer dispersion liquid of practical example 15 was 38 mPa.

### <Comparison example 1>

A solid plasticizer dispersion liquid of comparison example 1 was prepared similarly to practical example 9 except that Surfinol TG (diol, clouding point: 46 °C, available from Nissin Chemical Industry Co., Ltd.) was used as a surfactant instead of RK-70 (diol, clouding point: 53 °C, available from Nissin Chemical Industry Co., Ltd.) used in practical example 9.

Herein, the median particle diameter of a micelle of solid plasticizer was measured similarly to practical example 9. As a result, in comparison example 1, a dispersion time period of 9.0 hours was needed until the median particle diameter of the micelle of solid plasticizer reached 1.0 µm.

Also, the solid plasticizer dispersion liquid of comparison example 1 was visually observed. As a result, foaming was observed in the solid plasticizer dispersion liquid of comparison example 1.

Further, the viscosity of the solid plasticizer dispersion liquid of comparison example 1 was measured similarly to practical example 9. As a result, the viscosity of the solid plasticizer dispersion liquid of comparison example 1 was 170 mPa.

### <Comparison example 2>

A solid plasticizer dispersion liquid of comparison example 2 was prepared similarly to practical example 9 except that PD001 (diol, clouding point: 44 °C, available from Nissin Chemical Industry Co., Ltd.) was used as a surfactant instead of RK-70 (diol, clouding point: 53 °C, available from Nissin Chemical Industry Co., Ltd.) used in practical example 9.

Herein, the median particle diameter of a micelle of solid plasticizer was measured similarly to practical example 9. As a result, in comparison example 2, a dispersion time period of 22.0 hours was needed until the median particle diameter of the micelle of solid plasticizer reached 1.0 µm.

Also, the solid plasticizer dispersion liquid of comparison example 2 was visually observed. As a result, foaming was observed in the solid plasticizer dispersion liquid of comparison example 2.

Further, the viscosity of the solid plasticizer dispersion liquid of comparison example 2 was measured similarly to practical example 9. As a result, the viscosity of the solid plasticizer dispersion liquid of comparison example 2 was 185 mPa.

### <Comparison example 3>

A solid plasticizer dispersion liquid of comparison example 3 was prepared similarly to practical example 9 except that RK-101 (diol, clouding point: 49 °C, available from Nissin Chemical Industry Co., Ltd.) was used as a surfactant instead of RK-70 (diol, clouding point: 53 °C, available from Nissin Chemical Industry Co., Ltd.) used in practical example 9.

Herein, the median particle diameter of a micelle of solid plasticizer was measured similarly to practical example 9. As a result, in comparison example 3, a dispersion time period of 14.0 hours was needed until the median particle diameter of the micelle of solid plasticizer reached 1.0 µm.

Also, the solid plasticizer dispersion liquid of comparison example 3 was visually observed. As a result, foaming was observed in the solid plasticizer dispersion liquid of comparison example 3.

Further, the viscosity of the solid plasticizer dispersion liquid of comparison example 3 was measured similarly to practical example 9. As a result, the viscosity of the solid plasticizer dispersion liquid of comparison example 3 was 120 mPa.

### <Comparison example 4>

A solid plasticizer dispersion liquid of comparison example 4 was prepared similarly to practical example 9 except that Lionol TD-730 (monool block type, clouding point: 37 °C, available from Lion Corporation) was used as a surfactant instead of RK-70 (diol, clouding point: 53 °C, available from Nissin Chemical Industry Co., Ltd.) used in practical example 9.

Herein, the median particle diameter of a micelle of solid plasticizer was measured similarly to practical example 9. As a result, in comparison example 4, a dispersion time period of 35.0 hours was needed until the median particle diameter of the micelle of solid plasticizer reached 1.0 µm.

Also, the solid plasticizer dispersion liquid of comparison example 4 was visually observed. As a result, foaming was observed in the solid plasticizer dispersion liquid of comparison example 4.

Further, the viscosity of the solid plasticizer dispersion liquid of comparison example 4 was measured similarly to practical example 9. As a result, the viscosity of the solid plasticizer dispersion liquid of comparison example 4 was 920 mPa.

The kinds and addition conditions of the surfactants in the solid plasticizer dispersion liquids of practical examples 1 - 15 and comparison examples 1 - 4 and the measurement results obtained with respect to the solid plasticizer dispersion liquids of practical examples 1 - 15 and comparison examples 1 - 4 are shown in Table 1.

**Table 1**

| (1) | (2) | | | | | (3) | (4) | (5) | (6) |
|---|---|---|---|---|---|---|---|---|---|
| | (2a) | | (2b) | (2c) | (2d) | | | | |
| P. E. 1 | Leox 2008C | N | 50 | 0.02 | B. D. | 1000 | 8.5 | A | 71 |
| P. E. 2 | Leox 2160C | N | 60 | 0.02 | B. D. | 1000 | 8.2 | A | 56 |
| P. E. 3 | TD-2007 | M | 55 | 0.02 | B. D. | 1000 | 8.6 | A | 55 |
| P. E. 4 | TDM-90 | M | 59 | 0.02 | B. D. | 1000 | 7.9 | A | 51 |
| P. E. 5 | RK-103 | D | 50 | 0.02 | B. D. | 1000 | 8.0 | A | 46 |
| P. E. 6 | RK-70 | D | 53 | 0.02 | B. D. | 1000 | 8.1 | A | 46 |
| P. E. 7 | RK105 | D | 58 | 0.02 | B. D. | 1000 | 7.9 | A | 44 |
| P. E. 8 | RK-103 | D | 50 | 0.15 | B. D. | 1000 | 3.7 | A | 42 |
| P. E. 9 | RK-70 | D | 53 | 0.15 | B. D. | 1000 | 3.5 | A | 43 |
| P. E. 10 | RK105 | D | 58 | 0.15 | B. D. | 1000 | 3.6 | A | 40 |
| P. E. 11 | RK-103 | D | 50 | 0.30 | B. D. | 1000 | 4.3 | P | 38 |
| P. E. 12 | RK-70 | D | 53 | 0.30 | B. D. | 1000 | 4.2 | P | 40 |
| P. E. 13 | RK105 | D | 58 | 0.30 | B. D. | 1000 | 4.4 | P | 41 |
| P. E. 14 | RK-70 | D | 53 | 0.15 | B. D. | 3000 | 3.1 | A | 66 |
| P. E. 15 | RK-70 | D | 53 | 0.15 | B. D. D. D. | 3000 | 2.8 | A | 38 |
| C. E. 1 | Surfinol TG | D | 46 | 0.15 | B. D. | 1000 | 19.0 | P | 185 |
| C. E. 2 | PD001 | D | 44 | 0.15 | B. D. | 1000 | 22.0 | P | 710 |
| C. E. 3 | RK-101 | D | 49 | 0.15 | B. D. | 1000 | 14.0 | P | 120 |
| C. E. 4 | TD-730 | M | 37 | 0.15 | B. D. | 1000 | 35.0 | P | 920 |

| | | | | | | | | | |
|---|---|---|---|---|---|---|---|---|---|
| (1) = Solid plasticizer dispersion liquid; (2) = Surfactant; (2a) = Material; (2b) = Clouding point (°C); (2c) = Loading (%) ; (2d) = Addition method; (3) = Rotational frequency (rotations/ minute); (4) = Dispersion time period (hour); (5) = Foaming; (6) = Viscosity (mPa) ; P. E. = Practical example; C. E. = Comparison example; B. D. = Before dispersion; D. D. = During dispersion; A = Absence; P = Presence; N = Natural alcohol; M = Monool; D = Diol | | | | | | | | | |

In table 1, first, as the solid plasticizer dispersion liquids of practical examples 1 - 15 in which a surfactant with a clouding point equal to or higher than 50 °C was used are compared to the solid plasticizer dispersion liquids of comparison examples 1 - 4 in which a clouding point lower than 50 °C was used, it can be confirmed that a time period (dispersion time period) required for making the particle diameter of a micelle of solid plasticizer be 1.0 µm in the preparation of the solid plasticizer dispersion liquids of practical examples 1 - 15 in which a surfactant with a clouding point equal to or higher than 50 °C was used was significantly shorter than a time period (dispersion time period) required for making the particle diameter of a micelle of solid plasticizer be 1.0 µm in the preparation of the solid plasticizer dispersion liquids of comparison examples 1 - 4 in which a surfactant with a clouding point lower than 50 °C was used. Also, it can be confirmed that the viscosities of the solid plasticizer dispersion liquids of practical examples 1 - 15 in which a surfactant with a clouding point equal to or higher than 50 °C was used were lower than the viscosities of the solid plasticizer dispersion liquids of comparison examples 1 - 4 in which a surfactant with a clouding point lower than 50 °C was used, and could keep the fluidities of the solid plasticizer dispersion liquids.

Also, as the solid plasticizer dispersion liquids of practical examples 1 - 13 in which the rotational frequency of the stirring blade for stirring the solid plasticizer dispersion liquid was 1,000 rotations / minute are compared to the solid plasticizer dispersion liquids of practical examples 14 and 15 in which the rotational frequency of the stirring blade for stirring the solid plasticizer dispersion liquid was 3,000 rotations / minute, it can be confirmed that a time period (dispersion time period) required for making the particle diameter of a micelle of solid plasticizer be 1.0 µm in the preparation of the solid plasticizer dispersion liquids of practical examples 14 and 15 in which the rotational frequency of the stirring blade for stirring the solid plasticizer dispersion liquid was 3,000 rotations / minute was significantly shorter than a time period (dispersion time period) required for making the particle diameter of a micelle of solid plasticizer be 1.0 µm in the preparation of the solid plasticizer dispersion liquids of practical examples 1 - 13 in which the rotational frequency of the stirring blade for stirring the solid plasticizer dispersion liquid was 1,000 rotations / minute.

Next, as the solid plasticizer dispersion liquids of practical examples 1 - 4 in which a natural alcohol or monool-type surfactant was used are compared to the solid plasticizer dispersion liquids of practical examples 5 - 7 in which a diol-type surfactant was used, it can be confirmed that the viscosities of the solid plasticizer dispersion liquids of practical examples 5 - 7 in which a diol-type surfactant was used were lower than the viscosities of the solid plasticizer dispersion liquids of practical examples 1 - 4 in which a natural alcohol or monool-type surfactant was used, and exhibited good fluidities.

Also, as the solid plasticizer dispersion liquids of practical examples 1 - 7 which contained 0.02 % by weight of a surfactant are compared to the solid plasticizer dispersion liquids of practical examples 8 - 15 which contained 0.15 % by weight or 0.30 % by weight of a surfactant, it can be confirmed that a dispersion time period required in order that the particle diameter of a micelle of solid plasticizer reached 1.0 µm when the solid plasticizer dispersion liquids of practical examples 8 - 15 which contained 0.15 % by weight or 0.30 % by weight of a surfactant were prepared was shorter than a dispersion time period required in order that the particle diameter of a micelle of solid plasticizer reached 1.0 µm when the solid plasticizer dispersion liquids of practical examples 1 - 7 which contained 0.02 % by weight of a surfactant were prepared.

Further, as the solid plasticizer dispersion liquids of practical examples 1 - 10, 14 and 15 which contained 0.02 % by weight or 0.15 % by weight of a surfactant are compared to the solid plasticizer dispersion liquids of practical examples 11 - 13 which contained 0.30 % by weight of a surfactant, foaming was observed with respect to the solid plasticizer dispersion liquids of practical examples 11 - 13 which contained 0.30 % by weight of a surfactant and no foaming was observed with respect to the solid plasticizer dispersion liquids of practical examples 1 - 10, 14 and 15 which contained 0.02 % by weight or 0.15 % by weight of a surfactant.

In addition, as the solid plasticizer dispersion liquid of practical example 15 in which a surfactant was stepwise added is compared to the solid plasticizer dispersion liquid of practical example 14 in which the whole of a surfactant was added at a time, it can be confirmed that a time period (a dispersion time period) required for making the particle diameter of a micelle of solid plasticizer be 1.0 µm in the preparation of the solid plasticizer dispersion liquid of practical example 15 in which a surfactant was stepwise added was shorter than a time period (a dispersion time period) required for making the particle diameter of a micelle of solid plasticizer be 1.0 µm in the preparation of the solid plasticizer dispersion liquid of practical example 14 in which the whole of a surfactant was added at a time. Also, it can be confirmed that the viscosity of the solid plasticizer dispersion liquid of practical example 15 in which a surfactant was stepwise added was lower than the viscosity of the solid plasticizer dispersion liquid of practical example 14 in which the whole of a surfactant was added at a time, and could keep the fluidity of the solid plasticizer dispersion liquid.

Next, practical examples of heat-sensitive adhesive materials according to the present invention are described with comparison examples of conventional heat-sensitive adhesive materials.

### (2) Preparation of heat-sensitive coloring layer coating liquid

### (2-a) Preparation of leuco dye dispersion liquid

20 parts of 3-dibutylamino-6-methyl-N-7-anilinofluorane as a leuco dye, 20 parts of 10 % aqueous solution of poly(vinyl alcohol), and 60 parts of water were mixed so as to obtain a liquid composition. The particles of the leuco dye contained in the pbtained liquid composition were pulverized by using a sand mill until the average particle diameter of the leuco dye particles reached 0.5 µm.

### (2-b) Preparation of developer dispersion liquid

20 parts of 4-isopropoxy-4'-hydroxy-diphenylsulfone as a developer, 10 parts of di-(p-methylbenzyl) oxalate as a supercooling accelerator, 10 parts of calcium carbonate as a pigment having oil absorption property, 30 parts of 10 % aqueous solution of poly(vinyl alcohol), and 30 parts of water were mixed so as to a liquid composition. The particles of the developer contained in the obtained liquid composition were pulverized by using a ball mill until the average particle diameter of the developer particles reached 0.5 µm.

### (2-c) Preparation of heat-sensitive coloring layer coating liquid

20 parts of the leuco dye dispersion liquid obtained in (2-a), 60 parts of the developer dispersion liquid obtained in (2-b), 30 parts of carboxy-modified poly(vinyl alcohol) (solid content: 10 %, KL-318, available from Kuraray Co., Ltd.), and 1 part of aqueous solution of dioctylsulfosuccinate (solid content: 5 %) were mixed so as to obtain a heat-sensitive coloring layer coating liquid.

### (3) Preparation of protective layer coating liquid

40 parts of aqueous dispersion liquid of aluminum hydroxide (solid content: 50 %), 6 parts of aqueous dispersion liquid of zinc stearate (solid content: 30%), 1 part of aqueous solution of dioctylsulfosuccinate (solid content: 5 %), and 200 parts of 10 % aqueous solution of poly(vinyl alcohol) having two acetone groups (content of acetone monomer units: 4 %, polymerization degrees: 1,600; saponification value: 98%, available from Shin-Etsu Chemical Co., Ltd.), 10 parts of aqueous solution of adipic acid hydrazide as a crosslinking agent (solid content: 10 %) and 43 parts of water were mixed so as to obtain a protective layer coating liquid.

### (4) Preparation of supercooling accelerator dispersion liquid

100 parts of di(p-methylbenzyl) oxalate as a supercooling accelerator, 50 parts of carboxy-modified poly(vinyl alcohol) (solid content: 10%, KL-318, available from Kuraray Co., Ltd.), and 200 parts of water were uniformly mixed so as to obtain a liquid composition. The particles of the supercooling accelerator contained in the obtained liquid composition were pulverized by using a ball mill until the average particle diameter of the supercooling accelerator reached 1.0 µm.

### (5) Preparation of underlying layer coating liquid

100 parts of thermoplastic resin emulsion AP5570 (di(ethylhexyl) acrylate resin, solid content: 55 %, glass transition temperature: -65 °C, available from Showa Highpolymer Co., Ltd.), 85 parts of hollow particles R300 (rate of hollow: 90%, solid content: 33 %, available from Matsumoto Yushi-Seiyaku Co., Ltd.), and 350 parts of water were sufficiently stirred and mixed so as to obtain underlying layer coating liquid.

### (6) Preparation of heat-sensitive adhesive layer coating liquid

100 parts of thermoplastic resin emulsion AP5570 (main component: di(ethylhexyl) acrylate resin, solid content: 55 %, glass transition point: -65 °C, available from Showa Highpolymer Co., Ltd.), 70 parts of adhesive property improving agent emulsion E100 (main component: terpene phenol, solid content: 50 %, softening point: 145 °C, available from Arakawa Chemical Industries, Ltd.), 540 parts of each of the solid plasticizer dispersion liquids of practical examples 1 - 15 and comparison examples 1 - 4, 100 parts of supercooling accelerator dispersion liquid obtained in (4), and 130 parts of water were sufficiently stirred and mixed so as to obtain a heat-sensitive adhesive layer coating liquid corresponding to each of practical examples 1 - 15 and comparison examples 1 - 4.

### (7) Formation of a heat-sensitive coloring layer

First, the heat-sensitive coloring layer coating liquid obtained in (2) was coated on the surface of a woodfree paper (surface density: 60 g/m²) as a supporter and the heat-sensitive coloring layer coating liquid was dried so as to form a heat-sensitive coloring layer. Herein, the heat-sensitive coloring layer coating liquid was coated on the woodfree paper so that the surface density of the leuco dye adhering to the woodfree paper was approximately 0.6 g/m² when the heat-sensitive coloring layer coating liquid obtained in (2) was dried.

### (8) Formation of a protective layer

Next, the protective layer coating liquid obtained in (3) was coated on the surface of the heat-sensitive coloring layer obtained in (7) and the protective layer coating liquid was dried so as to form a protective layer. Herein, the protective layer coating liquid was coated on the heat-sensitive coloring layer so that the surface density of the components contained in the protective layer and adhered to the heat-sensitive coloring layer was approximately 3 g/m² when a protective layer coating liquid obtained in (3) was dried. Further, calender treatment was applied on the surface of the protective layer such that the smoothness of the surface of the protective layer was 5,000 seconds.

### (9) Formation of an underlying layer

Next, the underlying layer coating liquid obtained in (5) was coated on the surface of the heat-sensitive coloring layer obtained in (7) at the opposite side of the protective layer obtained in (8) and the underlying layer coating liquid was dried so as to form an underlying layer. Herein, the underlying layer coating liquid was coated on the heat-sensitive coloring layer so that the surface density of the components contained in the underlying layer and adhered to the heat-sensitive coloring layer was approximately 5 g/m² when the underlying layer coating liquid obtained in (5) was dried.

### (10) Formation of a heat-sensitive adhesive layer

Finally, the heat-sensitive adhesive layer coating liquid obtained in (6) which corresponded to each of practical examples 1 - 15 and comparison examples 1 - 4 was coated on the surface of the underlying layer obtained in (9) at a coating speed of approximately 20 m/minute, by using a linear wire bar with a diameter of 0.50 mm, and each heat-sensitive adhesive layer coating liquid corresponding to each of practical examples 1 - 15 and comparison examples 1 - 4 was dried so as to form each of heat-sensitive adhesive materials of practical examples 16 - 30 and comparison examples 5 - 8. Herein, the heat-sensitive adhesive layer coating liquid was coated on the underlying layer so that the surface density of the components contained in the heat-sensitive adhesive material layer and adhered to the underlying layer was approximately 13 g/m² when the heat-sensitive adhesive layer coating liquid obtained in (6) which corresponded to each of practical examples 1 - 15 and comparison examples 1 - 4 was dried.

The kinds of the solid plasticizer dispersion liquids used for the preparation of the heat-sensitive adhesive materials of practical examples 16 - 30 and comparison examples 5 - 8 and the measurement results obtained with respect to the heat-sensitive adhesive material of practical examples 16 - 30 and comparison examples 5 - 8 are shown in Table 2.

**Table 2**

| (7) | (8) | (9) | | (10) | (11) | (12) |
|---|---|---|---|---|---|---|
| | | (9a) | (9b) | | | |
| P.E. 16 | P.E. 1 | 4 | 4 | 2510 | 7 | 1.49 |
| P.E. 17 | P.E. 2 | 4 | 4 | 2780 | 8 | 1.63 |
| P.E. 18 | P.E. 3 | 4 | 4 | 2810 | 8 | 1.72 |
| P.E. 19 | P.E. 4 | 4 | 4 | 2900 | 8 | 1.77 |
| P.E. 20 | P.E. 5 | 5 | 5 | 3310 | 10 | 1.91 |
| P.E. 21 | P.E. 6 | 5 | 5 | 3240 | 10 | 1.89 |
| P.E. 22 | P.E. 7 | 5 | 5 | 3280 | 10 | 1.90 |
| P.E. 23 | P.E. 8 | 5 | 5 | 3250 | 10 | 1.92 |
| P.E. 24 | P.E. 9 | 5 | 5 | 3240 | 10 | 1.91 |
| P.E. 25 | P.E. 10 | 5 | 5 | 3300 | 10 | 1.92 |
| P.E. 26 | P.E. 11 | 5 | 4 | 3120 | 7 | 1.57 |
| P.E. 27 | P.E. 12 | 5 | 4 | 3220 | 7 | 1.60 |
| P.E. 28 | P.E. 13 | 5 | 4 | 3210 | 7 | 1.62 |
| P.E. 29 | P.E. 14 | 5 | 5 | 2480 | 10 | 1.55 |
| P.E. 30 | P.E. 15 | 5 | 5 | 3220 | 10 | 1.91 |
| C.E. 4 | C.E. 1 | 2 | 3 | 1570 | 4 | 1.16 |
| C.E. 5 | C.E. 2 | 1 | 4 | 1100 | 4 | 1.01 |
| C.E. 6 | C.E. 3 | 2 | 1 | 1350 | 4 | 1.20 |
| C.E. 7 | C.E. 4 | 1 | 3 | 650 | 3 | 1.00 |

| | | | | | | |
|---|---|---|---|---|---|---|
| (7) = heat-sensitive adhesive material; (8) = solid plasticizer dispersion liquid; (9) = coating characteristic; (9a) = stripe(s); (9b) = crawling; (10) = adhesive strength; (11) = blocking characteristic; (12) = printing characteristic; P.E. = practical example; C. E. = Comparison example | | | | | | |

### <Coating characteristic>

In regard to each of the heat-sensitive adhesive materials of practical examples 16 - 30 and comparison examples 5 - 8, the stripe(s) and crawling on the obtained heat-sensitive adhesive material were visually evaluated according to the following five-step indices. The results of evaluation of both stripe(s) and crawling on the heat-sensitive adhesive material are shown in FIG. 2.

### (Stripe(s))

1: Five or more coating stripes with a width of 1 mm or greater were observed.
2: One or more and less than five coating stripes with a width of 1 mm or greater were observed.
3: One or more and less than five coating stripes with a width of 0.3 mm or greater and less than 1 mm or greater were observed.
4: One or more and less than five coating stripes with a width less than 0.3 mm were observed.
5: No coating stripe was observed.

### (Crawling)

1: Seven or more crawling points with a diameter of 8 mm or greater were observed.
2: One or more and less than seven crawling points with a diameter of 8 mm or greater were observed.
3: One or more and less than seven crawling points with a diameter of 2 mm or greater and less than 8 mm were observed.
4: One or more and less than seven crawling points with a diameter less than 2 mm were observed.
5: No crawling point was observed.

### <Adhesive strength>

Each of the heat-sensitive adhesive materials of practical examples 16 - 30 and comparison examples 5 - 8 was cut into a size of a width of 4 cm and a length of 10 cm. Under the environmental conditions of a temperature of 22 °C and a humidity of 65 %RH, a thermal head (TH-0976SP, available from TEC Corporation) contacted the surface of the cut heat-sensitive adhesive material so as to activate the heat-sensitive adhesive material. More preferably, printing of characters was performed on the cut heat-sensitive adhesive material at a character-printing speed of 100 mm/second by using a thermal head. Additionally, the thermal head had eight dots per 1 mm in which the value of resistance of each dot was 500 Ω, and could provide an activation energy of 26.0 mJ/mm² when all the dots of the thermal head were turned on electricity. Also, when printing of characters was performed on the cut heat-sensitive adhesive material by using the thermal head, a silicone-based platen roll with a diameter of 1 cm was pressed against the cut heat-sensitive adhesive material on the pressure condition of 6 kg-weight/line at the opposite side of the thermal head.

The activated surface of the heat-sensitice adhesive material (heat-sensitive recording material label) activated by the thermal head was applied on the surface of a stainless steel SUS 304-2B by hand within 5 seconds after the heat-sensitive adhesive material, and while a pressure of 2 kg-wt/line was applied on the heat-sensitive adhesive material by a rubber covered roller, the rubber covered roller was once reciprocated so as to apply the heat-sensitive adhesive material on the surface of the stainless steel. After 2 minutes from when the heat-sensitive adhesive material was applied on the surface of the stainless steel, the heat-sensitive adhesive material was removed from the surface of the stainless steel on the conditions of a removal angle of 180 degrees and a removal speed of 300 mm/minute, and the average value of resistance of removal of the heat-sensitive adhesive material from the surface of the stainless steel was measured as an index of the adhesive strength of the heat-sensitive adhesive material. The numerical value of the average value of resistance of the removal of the heat-sensitive adhesive material from the surface of the stainless steel is shown in the unit of g-weight / 40 mm in Table 2 (Additionally, the numerical value has been rounded with respect to the first digit thereof (the left of the decimal point thereof)).

### <Blocking characteristic>

Set-solid printing was performed on the entire surface of the heat-sensitive recording layer (the heat-sensitive coloring layer + the protective layer) in each of the heat-sensitive adhesive materials of practical examples 16 - 30 and comparison examples 5 - 8 at a printing speed of 40 m/minute by using a letterpress rotary printing machine and a UV ink (DIC Ex-257 pale indigo B6). The UV ink printed on the heat-sensitive recording layer was irradiated with ultraviolet rays at a power of 3.6 kw from an ultraviolet lamp installed on the letterpress rotary printing machine immediately after the printing on the heat-sensitive recording layer, so that the UV ink printed on the heat-sensitive recording layer was cured.

In regard to each of the heat-sensitive adhesive materials of practical examples 16 - 30 and comparison examples 5 - 8, while the adhesive face of the heat-sensitive adhesive layer of one heat-sensitive adhesive material was superposed on and contacted a UV ink printing face of the heat-sensitive recording layer of another heat-sensitive adhesive material, a pressure of 2 kg-weight/cm² was applied on both superposed heat-sensitive adhesive materials for 24 hours on the conditions of a temperature of 50 °C and drying. Afterward, the superposed heat-sensitive adhesive materials were left to stand at room temperature, and one of the heat-sensitive adhesive materials was removed from the other heat-sensitive adhesive material. Then, the blocking characteristic of the heat-sensitive adhesive material was evaluated according to the following 10-step indices.
10: No removal resistance of the heat-sensitive adhesive material was found and the heat-sensitive adhesive material was removed by the self-weight thereof.
9: A slight removal resistance of the heat-sensitive adhesive material was found but no sound of removal of the heat-sensitive adhesive material was made.
8: A removal resistance of the heat-sensitive adhesive material was found and slight sound of removal of the heat-sensitive adhesive material was made.
7: Sound of removal of the heat-sensitive adhesive material was made.
6: Point-like transfer of the heat-sensitive adhesive material was observed on a part of the adhesive face thereof.
5: Point-like transfer of the heat-sensitive adhesive material was observed in an area of 30 % - 50 % of the adhesive face thereof.
4: Point-like transfer of the heat-sensitive adhesive material was observed in an area of 50 % - the entire surface of the adhesive face thereof.
3: Interlayer removal in the heat-sensitive adhesive material was observed on a part of the adhesive face thereof.
2: Interlayer removal in the heat-sensitive adhesive material was observed in an area of 30 % - 50 % of the adhesive face thereof.
1: Interlayer removal in the heat-sensitive adhesive material was observed in an area of 50 % - the entire surface of the adhesive face thereof.

The evaluation results of blocking characteristics of the heat-sensitive adhesive materials are shown in Table 2.

### <Printing characteristic>

Set-solid printing was performed on the entire surface of the heat-sensitive adhesive layer in each of the heat-sensitive adhesive materials of practical examples 16 - 30 and comparison examples 5 - 8 at a printing speed of 40 m/minute by using a letterpress rotary printing machine and a UV ink (Toka UV NVR sumi J). The UV ink printed on the heat-sensitive adhesive layer was irradiated with ultraviolet rays at a power of 3.6 kw from an ultraviolet lamp installed on the letterpress rotary printing machine immediately after the printing on the heat-sensitive adhesive layer, so that the UV ink printed on the heat-sensitive adhesive layer was cured. The density of a printing face of the heat-sensitive adhesive layer was measured by using a commercially available Macbeth Reflection Densitometer (available from Macbeth Corporation). The measurement value of the density of the printing surface on the heat-sensitive adhesive layer as an index of the printing characteristic is shown in Table 2.

As shown in Table 2, first, as the heat-sensitive adhesive materials of practical examples 16 - 30 in which the solid plasticizer dispersion liquids of practical examples 1 - 15 containing a surfactant with a clouding point equal to or higher than 50 °C were used are compared to the heat-sensitive adhesive materials of comparison examples 5 - 8 in which the solid plasticizer dispersion liquids of comparison examples 1 - 4 containing a surfactant with a clouding point lower than 50 °C were used, it can be confirmed that the evaluation result of each of the coating characteristics (stripe(s) and crawling), adhesive strengths, blocking characteristics and printing characteristics of the heat-sensitive adhesive materials of practical examples 16 - 30 were higher than the evaluation result of each of the coating characteristics (stripe(s) and crawling), adhesive strengths, blocking characteristics and printing characteristics of the heat-sensitive adhesive materials of comparison examples 5 - 8, respectively. (therefore, the heat-sensitive adhesive materials of practical examples 16 - 30 have practical performances higher than those of the heat-sensitive adhesive materials of comparison examples 5 - 8.)

Also, as the heat-sensitive adhesive materials of practical examples 16 - 19 in which the solid plasticizer dispersion liquids of practical examples 1 - 4 containing a natural alcohol or monool-type surfactant were used are compared to the heat-sensitive adhesive materials of practical examples 20 - 22 in which the solid plasticizer dispersion liquids of practical examples 5 - 7 containing a diol-type surfactant were used, it can be confirmed that the evaluation result of each of the coating characteristics (stripe(s) and crawling), adhesive strengths, blocking characteristics and printing characteristics of the heat-sensitive adhesive materials of practical examples 20 - 22 were higher than the evaluation result of each of the coating characteristics (stripe(s) and crawling), adhesive strengths, blocking characteristics and printing characteristics of the heat-sensitive adhesive materials of practical examples 16 - 19, respectively.

Further, as the heat-sensitive adhesive materials of practical examples 20 - 25, 29 and 30 in which the solid plasticizer dispersion liquids of practical examples 5 - 10, 14 and 15 containing 0.02 % by weight or 0.15 % by weight of a surfactant were used are compared to the heat-sensitive adhesive materials of practical examples 26 - 28 in which the solid plasticizer dispersion liquids of practical examples 11 - 13 containing 0.30 % by weight of a surfactant were used, it can be confirmed that the evaluation results of the crawling and blocking characteristics of the heat-sensitive adhesive materials of practical examples 20 - 25, 29 and 30 were higher than the evaluation results of the crawling and blocking characteristics of the heat-sensitive adhesive materials of practical examples 26 - 28, respectively.

In addition, as the heat-sensitive adhesive material of practical example 30 in which the solid plasticizer dispersion liquid of practical example 15 was used in which a surfactant was step-wise added is compared to the heat-sensitive adhesive material of practical example 29 in which the solid plasticizer dispersion liquid of practical example 14 was used in which the total quantity of a surfactant was added at a time, it can be confirmed that the evaluation results of the adhesive strengths and printing characteristic of the heat-sensitive adhesive material of practical example 30 were higher than the evaluation results of the adhesive strengths and printing characteristic of the heat-sensitive adhesive material of practical example 29, respectively.

Although the embodiments and practical examples of the present invention have been specifically described above, the present invention is not limited to these embodiments and practical examples but these embodiments and practical examples of the present invention can be varied or modified without departing from the spirit and scope of the present invention.

### [Appendix]

The first object of the embodiments of the present invention is to provide a composition capable of dispersing a plasticizer more stably.

The second object of the embodiments of the present invention is to provide a method of manufacturing a composition capable of dispersing a plasticizer more stably.

The third object of the embodiments of the present invention is to provide a heat-sensitive adhesive material capable of having a better adhesive property.

The fourth object of the embodiments of the present invention is to provide an information recording medium capable of having a better adhesive property.

The first aspect of the embodiments of the present invention is a composition which contains a plasticizer for plasticizing a thermoplastic resin and a surfactant, characterized in that the surfactant comprises a surfactant having a clouding point equal to or higher than 50 °C.

The second aspect of the embodiments of the present invention is a method of manufacturing a composition, for manufacturing a composition which contains a plasticizer for plasticizing a thermoplastic resin and a surfactant, characterized by using a surfactant having a clouding point equal to or higher than 50 °C.

The third aspect of the embodiments of the present invention is a composition characterized by being manufactured by a method of manufacturing a composition being the second aspect of the present invention.

The fourth aspect of the embodiments of the present invention is a heat-sensitive adhesive material which exerts an adhesive property thereof by heating, characterized by having a layer which contains a thermoplastic resin, a plasticizer for plasticizing the thermoplastic resin and a surfactant having a clouding point equal to or higher than 50 °C.

The fifth aspect of the embodiments of the present invention is a heat-sensitive adhesive material which exerts an adhesive property thereof by heating, characterized by comprising a layer obtained by drying a composition being the first aspect of the present invention and further containing a thermoplastic resin or a composition being the third aspect of the present invention.

The sixth aspect of the embodiments of the present invention is an information recording material capable of recording information, characterized by comprising a heat-sensitive adhesive material being the fourth aspect of the present invention or the fifth aspect of the present invention.

According to the first aspect of the embodiments of the present invention or the third aspect of the embodiments of the present invention, a composition capable of dispersing a plasticizer more stably can be provided.

According to the second aspect of the embodiments of the present invention, a method of manufacturing a composition capable of dispersing a plasticizer more stably can be provided.

According to the fourth aspect of the embodiments of the present invention or the fifth aspect of the embodiments of the present invention, a heat-sensitive adhesive material capable of having a better adhesive property can be provided.

According to the sixth aspect of the embodiments of the present invention, an information recording medium capable of having a better adhesive property can be provided.

## Claims

1. A composition (10) which contains a plasticizer (12) for plasticizing a thermoplastic resin (11) and a surfactant (13), **characterized in that** the surfactant (13) comprises a surfactant (13) having a clouding point equal to or higher than 50 °C,
wherein the clouding point of the surfactant (13) is the temperature at which the whole of a clear aqueous solution of a surfactant (13) with a concentration of 0.5 % by weight that is heated under atmospheric pressure becomes sharply clouded, and
wherein the plasticizer (12) is selected from the group consisting of phthalic acid esters; N-cyclohexyl-p-toluenesulfonamide; benzoic acid esters; sucrose octaacetate; dimethyl isophthalate; tricyclohexyl citrate; catechol derivatives; hindered phenol-type compounds; and triazole compounds.

2. The composition (10) as claimed in claim 1, **characterized in that** a content of the surfactant (13) is equal to or more than 0.025 % by weight.

3. The composition (10) as claimed in claim 1 or 2, **characterized in that** a content of the surfactant (13) is equal to or less than 0.250 % by weight.

4. The composition (10) as claimed in any of claims 1 through 3, **characterized in that** the surfactant (13) comprises a diol-type surfactant.

5. The composition (10) as claimed in any of claims 1 through 4, **characterized by** further comprising a thermoplastic resin (11).

6. A method of manufacturing a composition (10) which contains a plasticizer (12) for plasticizing a thermoplastic resin (11) and a surfactant (13), **characterized by** using a surfactant (13) having a clouding point equal to or higher than 50 °C,
wherein the clouding point of the surfactant (13) is the temperature at which the whole of a clear aqueous solution of a surfactant (13) with a concentration of 0.5 % by weight that is heated under atmospheric pressure becomes sharply clouded, and
wherein the plasticizer (12) is selected from the group consisting of phthalic acid esters; N-cyclohexyl-p-toluenesulfonamide; benzoic acid esters; sucrose octaacetate; dimethyl isophthalate; tricyclohexyl citrate; catechol derivatives; hindered phenol-type compounds; and triazole compounds.

7. The method of manufacturing a composition (10) as claimed in claim 6, **characterized by** comprising mixing at least the plasticizer (12) and the surfactant (13) at a rotational speed equal to or greater than 1,500 rotations /minute.

8. The method of manufacturing a composition (10) as claimed in claim 6 or 7, **characterized by** comprising a step of mixing at least the plasticizer (12) and a part of the surfactant (13) to obtain a mixture and a step of mixing a residual part of the surfactant (13) into the mixture to obtain the composition (10).

9. The method of manufacturing a composition (10) as claimed in any of claims 6 through 8, **characterized by** containing 0.025 % by weight or more of the surfactant (13) in the composition (10).

10. The method of manufacturing a composition (10) as claimed in any of claims 6 through 9, **characterized by** containing 0.250 % by weight or less of the surfactant (13) in the composition (10).

11. The method of manufacturing a composition (10) as claimed in any of claims 6 through 10, **characterized by** using a diol-type surfactant.

12. The method of manufacturing a composition (10) as claimed in any of claims 6 through 11, **characterized by** further containing a thermoplastic resin (11) in the composition (10).

13. A composition (10) **characterized by** being manufactured by a method of manufacturing a composition (10) as claimed in any of claims 6 through 12.

14. A heat-sensitive adhesive material (30) which exerts an adhesive property thereof by heating, **characterized by** having a layer (33) which contains a thermoplastic resin (11), a plasticizer (12) for plasticizing the thermoplastic resin (11) and a surfactant (13) having a clouding point equal to or higher than 50 °C, wherein the clouding point of the surfactant (13) is the temperature at which the whole of a clear aqueous solution of a surfactant (13) with a concentration of 0.5 % by weight that is heated under atmospheric pressure becomes sharply clouded, and
wherein the plasticizer (12) is selected from the group consisting of phthalic acid esters; N-cyclohexyl-p-toluenesulfonamide; benzoic acid esters; sucrose octaacetate; dimethyl isophthalate; tricyclohexyl citrate; catechol derivatives; hindered phenol-type compounds; and triazole compounds.

15. The heat-sensitive adhesive material (30) as claimed in claim 14, **characterized in that** the surfactant (13) comprises a diol-type surfactant.

16. A heat-sensitive adhesive material (30) which exerts an adhesive property thereof by heating, **characterized by** comprising a layer (33) obtained by drying a composition (10) as claimed in claim 5 or a composition (10) as claimed in claim 13.

17. An information recording material (50) capable of recording information, **characterized by** comprising a heat-sensitive adhesive material (30) as claimed in any of claims 14 through 16.

18. The information recording material (50) as claimed in claim 17, **characterized by** further comprising a heat-sensitive recording material capable of recording information by heating.

19. The information recording material (50) as claimed in claim 17 or 18, **characterized by** further comprising a layer (54) capable of recording information by receiving ink.

## Patentansprüche

1. Zusammensetzung (10), die einen Weichmacher (12) zum Weichmachen eines thermoplastischen Harzes (11) und ein Tensid (13) enthält, **dadurch gekennzeichnet, dass** das Tensid (13) ein Tensid (13) mit einem Trübungspunkt gleich oder höher als 50°C umfasst,
wobei der Trübungspunkt des Tensids (13) die Temperatur ist, bei der die Gesamtheit einer klaren wässrigen Lösung eines Tensids (13) mit einer Konzentration von 0,5 Gew.-%, die unter Atmosphärendruck erwärmt wird, abrupt trübe wird, und
wobei der Weichmacher (12) ausgewählt ist aus der Gruppe bestehend aus Phthalsäureestern; N-Cyclohexyl-p-toluolsulfonamid; Benzoesäureestern; Sucroseoctaacetat; Dimethylisophthalat; Tricyclohexylcitrat; Catecholderivaten; gehinderten Phenol-Verbindungen; und Triazolverbindungen.

2. Zusammensetzung (10) wie in Anspruch 1 beansprucht, **dadurch gekennzeichnet, dass** der Gehalt des Tensids (13) gleich oder mehr als 0,025 Gew.-% ist.

3. Zusammensetzung (10) wie in Anspruch 1 oder 2 beansprucht, **dadurch gekennzeichnet, dass** der Gehalt des Tensids (13) gleich oder weniger als 0,250 Gew.-% ist.

4. Zusammensetzung (10) wie in irgendeinem der Ansprüche 1 bis 3 beansprucht, **dadurch gekennzeichnet, dass** das Tensid (13) ein Tensid vom Dioltyp umfasst.

5. Zusammensetzung (10) wie in irgendeinem der Ansprüche 1 bis 4 beansprucht, **dadurch gekennzeichnet, dass** sie ferner ein thermoplastisches Harz (11) umfasst.

6. Verfahren zur Herstellung einer Zusammensetzung (10), die einen Weichmacher (12) zum Weichmachen eines thermoplastischen Harzes (11) und ein Tensid (13) enthält, **dadurch gekennzeichnet, dass** ein Tensid (13) mit einem Trübungspunkt gleich oder höher als 50°C verwendet wird,
wobei der Trübungspunkt des Tensids (13) die Temperatur ist, bei der die Gesamtheit einer klaren wässrigen Lösung eines Tensids (13) mit einer Konzentration von 0,5 Gew.-%, die unter Atmosphärendruck erwärmt wird, abrupt trübe wird, und
wobei der Weichmacher (12) ausgewählt ist aus der Gruppe bestehend aus Phthalsäureestern; N-Cyclohexyl-p-toluolsulfonamid; Benzoesäureestern; Sucroseoctaacetat; Dimethylisophthalat; Tricyclohexylcitrat; Catecholderivaten; gehinderten Phenol-Verbindungen; und Triazolverbindungen.

7. Verfahren zur Herstellung einer Zusammensetzung (10) wie in Anspruch 6 beansprucht, **dadurch gekennzeichnet, dass** es das Mischen von zumindest dem Weichmacher (12) und dem Tensid (13) bei einer Drehzahl von gleich oder größer als 1.500 Umdrehungen/min umfasst.

8. Verfahren zur Herstellung einer Zusammensetzung (10) wie in Anspruch 6 oder 7 beansprucht, **dadurch gekennzeichnet, dass** es einen Schritt des Mischens von zumindest dem Weichmacher (12) und einem Teil des Tensids (13), um eine Mischung zu erhalten, und einen Schritt des Mischens des restlichen Teils des Tensids (13) in die Mischung, um die Zusammensetzung (10) zu erhalten, umfasst.

9. Verfahren zur Herstellung einer Zusammensetzung (10) wie in irgendeinem der Ansprüche 6 bis 8 beansprucht, **dadurch gekennzeichnet, dass** sie 0,025 Gew.-% oder mehr des Tensids (13) in der Zusammensetzung (10) enthält.

10. Verfahren zur Herstellung einer Zusammensetzung (10) wie in irgendeinem der Ansprüche 6 bis 9 beansprucht, **dadurch gekennzeichnet, dass** sie 0,250 Gew.-% oder weniger des Tensids (13) in der Zusammensetzung (10) enthält.

11. Verfahren zur Herstellung einer Zusammensetzung (10) wie in irgendeinem der Ansprüche 6 bis 10 beansprucht, **dadurch gekennzeichnet, dass** ein Tensid vom Dioltyp verwendet wird.

12. Verfahren zur Herstellung einer Zusammensetzung (10) wie in irgendeinem der Ansprüche 6 bis 11 beansprucht, **dadurch gekennzeichnet, dass** ferner ein thermoplastisches Harz (11) in der Zusammensetzung (10) enthalten ist.

13. Zusammensetzung (10), **dadurch gekennzeichnet, dass** sie durch ein Verfahren zur Herstellung einer Zusammensetzung (10) wie in irgendeinem der Ansprüche 6 bis 12 beansprucht hergestellt wird.

14. Wärmeempfindliches Klebstoffmaterial (30), das beim Erwärmen ein Klebvermögen zeigt, **gekennzeichnet durch** eine Schicht (33), die ein thermoplastisches Harz (11), einen Weichmacher (12) zum Weichmachen des thermoplastischen Harzes (11) und ein Tensid (13) mit einem Trübungspunkt gleich oder höher als 50°C enthält,
wobei der Trübungspunkt des Tensids (13) die Temperatur ist, bei der die Gesamtheit einer klaren wässrigen Lösung eines Tensids (13) mit einer Konzentration von 0,5 Gew.-%, die unter Atmosphärendruck erwärmt wird, abrupt trübe wird, und
wobei der Weichmacher (12) ausgewählt ist aus der Gruppe bestehend aus Phthalsäureestern; N-Cyclohexyl-p-toluolsulfonamid; Benzoesäureestern; Sucroseoctaacetat; Dimethylisophthalat; Tricyclohexylcitrat; Catecholderivaten; gehinderten Phenol-Verbindungen; und Triazolverbindungen.

15. Wärmeempfindliches Klebstoffmaterial (30) wie in Anspruch 14 beansprucht, **dadurch gekennzeichnet, dass** das Tensid (13) ein Tensid vom Dioltyp umfasst.

16. Wärmeempfindliches Klebstoffmaterial (30), das beim Erwärmen ein Klebvermögen zeigt, **dadurch gekennzeichnet, dass** es eine Schicht (33) umfasst, die durch Trocknen einer Zusammensetzung (10) wie in Anspruch 5 beansprucht oder einer Zusammensetzung (10) wie in Anspruch 13 beansprucht erhalten wird.

17. Informationsaufzeichnungsmaterial (50), das Information aufzeichnen kann, **dadurch gekennzeichnet, dass** es ein wärmeempfindliches Klebstoffmaterial (30) wie in irgendeinem der Ansprüche 14 bis 16 beansprucht umfasst.

18. Informationsaufzeichnungsmaterial (50) wie in Anspruch 17 beansprucht, **dadurch gekennzeichnet, dass** es ferner ein wärmeempfindliches Aufzeichnungsmaterial umfasst, das durch Erwärmen Information aufzeichnen kann.

19. Informationsaufzeichnungsmaterial (50) wie in Anspruch 17 oder 18 beansprucht, **dadurch gekennzeichnet, dass** es ferner eine Schicht (54) umfasst, die durch Aufnahme von Druckfarbe/Tinte Information aufzeichnen kann.

## Revendications

1. Composition (10) qui contient un plastifiant (12) pour plastifier une résine thermoplastique (11) et un tensioactif (13), **caractérisée en ce que** le tensioactif (13) comprend un tensioactif (13) ayant un point de trouble égal ou supérieur à 50°C,
où le point de trouble du tensioactif (13) est la température à laquelle la totalité d'une solution aqueuse limpide d'un tensioactif (13) ayant une concentration de 0,5 % en masse qui est chauffée sous la pression atmosphérique devient nettement trouble, et
où le plastifiant (12) est choisi dans le groupe consistant en les esters de l'acide phtalique ; le N-cyclohexyl-p-toluènesulfonamide ; les esters de l'acide benzoïque ; l'octaacétate de saccharose ; l'isophtalate de diméthyle ; le citrate de tricyclohexyle ; les dérivés du catéchol ; les composés de type phénol à empêchement stérique ; et les composés du triazole.

2. Composition (10) selon la revendication 1, **caractérisée en ce que** la teneur du tensioactif (13) est égale ou supérieure à 0,025 % en masse.

3. Composition (10) selon la revendication 1 ou 2, **caractérisée en ce que** la teneur du tensioactif (13) est égale ou inférieure à 0,250 % en masse.

4. Composition (10) selon l'une quelconque des revendications 1 à 3, **caractérisée en ce que** le tensioactif (13) comprend un tensioactif de type diol.

5. Composition (10) selon l'une quelconque des revendications 1 à 4, **caractérisée en ce qu'**elle comprend en outre une résine thermoplastique (11).

6. Procédé de fabrication d'une composition (10) qui contient un plastifiant (12) pour plastifier une résine thermoplastique (11) et un tensioactif (13), **caractérisé par** l'utilisation d'un tensioactif (13) ayant un point de trouble égal ou supérieur à 50°C,
où le point de trouble du tensioactif (13) est la température à laquelle la totalité d'une solution aqueuse limpide d'un tensioactif (13) ayant une concentration de 0,5 % en masse qui est chauffée sous la pression atmosphérique devient nettement trouble, et
où le plastifiant (12) est choisi dans le groupe consistant en les esters de l'acide phtalique ; le N-cyclohexyl-p-toluènesulfonamide ; les esters de l'acide benzoïque ; l'octaacétate de saccharose ; l'isophtalate de diméthyle ; le citrate de tricyclohexyle ; les dérivés du catéchol ; les composés de type phénol à empêchement stérique ; et les composés du triazole.

7. Procédé de fabrication d'une composition (10) selon la revendication 6, **caractérisé en ce qu'**il comprend le mélange d'au moins le plastifiant (12) et le tensioactif (13) à une vitesse de rotation égale ou supérieure à 1 500 rotations/minute.

8. Procédé de fabrication d'une composition (10) selon la revendication 6 ou 7, **caractérisé en ce qu'**il comprend une étape de mélange d'au moins le plastifiant (12) et une partie du tensioactif (13) pour obtenir un mélange et une étape de mélange d'une partie résiduelle du tensioactif (13) dans le mélange pour obtenir la composition (10).

9. Procédé de fabrication d'une composition (10) selon l'une quelconque des revendications 6 à 8, **caractérisé en ce qu'**il contient 0,025 % en masse ou plus de tensioactif (13) dans la composition (10).

10. Procédé de fabrication d'une composition (10) selon l'une quelconque des revendications 6 à 9, **caractérisé en ce qu'**il contient 0,250 % en masse ou moins de tensioactif (13) dans la composition (10).

11. Procédé de fabrication d'une composition (10) selon l'une quelconque des revendications 6 à 10, **caractérisé en ce qu'**il utilise un tensioactif de type diol.

12. Procédé de fabrication d'une composition (10) selon l'une quelconque des revendications 6 à 11, **caractérisé en ce qu'**il contient en outre une résine thermoplastique (11) dans la composition (10).

13. Composition (10), **caractérisée en ce qu'**elle est fabriquée par un procédé de fabrication d'une composition (10) selon l'une quelconque des revendications 6 à 12.

14. Matériau adhésif thermosensible (30) qui exerce ses propriétés adhésives par chauffage, **caractérisé en ce qu'**il a une couche (33) qui contient une résine thermoplastique (11), un plastifiant (12) pour plastifier la résine thermoplastique (11) et un tensioactif (13), ayant un point de trouble égal ou supérieur à 50°C,
où le point de trouble du tensioactif (13) est la température à laquelle la totalité d'une solution aqueuse limpide d'un tensioactif (13) ayant une concentration de 0,5 % en masse qui est chauffée sous la pression atmosphérique devient nettement trouble, et
où le plastifiant (12) est choisi dans le groupe consistant en les esters de l'acide phtalique ; le N-cyclohexyl-p-toluènesulfonamide ; les esters de l'acide benzoïque ; l'octaacétate de saccharose ; l'isophtalate de diméthyle ; le citrate de tricyclohexyle ; les dérivés du catéchol ; les composés de type phénol à empêchement stérique ; et les composés du triazole.

15. Matériau adhésif thermosensible (30) selon la revendication 14, **caractérisé en ce que** le tensioactif (13) comprend un tensioactif de type diol.

16. Matériau adhésif thermosensible (30) qui exerce ses propriétés adhésives par chauffage, **caractérisé en ce qu'**il comprend une couche (33) obtenue par séchage d'une composition (10) selon la revendication 5 ou d'une composition (10) selon la revendication 13.

17. Matériau d'enregistrement d'informations (50) capable d'enregistrer des informations, **caractérisé en ce qu'**il comprend un matériau adhésif thermosensible (30) selon l'une quelconque des revendications 14 à 16.

18. Matériau d'enregistrement d'informations (50) selon la revendication 17, **caractérisé en ce qu'**il comprend en outre un matériau d'enregistrement thermosensible capable d'enregistrer des informations par chauffage.

19. Matériau d'enregistrement d'informations (50) selon la revendication 17 ou 18, **caractérisé en ce qu'**il comprend en outre une couche (54) capable d'enregistrer des informations en recevant une encre.
